# EUROPEAN PATENT APPLICATION

(11) **EP 4 184 990 A1**
(43) Date of publication of application: **24.05.2023**
(21) Application number: 20948760.2
(22) Date of filing: 07.08.2020
(51) Int. Cl.: H04W 24/04

(54) **COMMUNICATION METHOD AND APPARATUS**

(71) Applicant: Huawei Technologies Co., Ltd., Shenzhen, Guangdong 518129 (CN)
(72) Inventor: ZHENG, Juan, Shenzhen, Guangdong 518129 (CN); LI, Chaojun, Shenzhen, Guangdong 518129 (CN); TIE, Xiaolei, Shenzhen, Guangdong 518129 (CN); LUO, Zhihu, Shenzhen, Guangdong 518129 (CN); HOU, Hailong, Shenzhen, Guangdong 518129 (CN)
(74) Representative: Isarpatent
(86) International application number: PCT/CN2020/108017
(87) International publication number: WO 2022/027693

(57) **Abstract**

A communication method and apparatus are provided, and are applied to a 5G communication system, a 5.5G communication system, a 6G communication system, and a system integrating a plurality of communication systems. The communication system includes a network device and a terminal device, and power consumption of the terminal device is reduced from a perspective of communication between the network device and the terminal device. In embodiments of this application, the terminal device determines a first frequency domain resource, behavior of the terminal device on the first frequency domain resource is restricted, and the terminal device performs a first-type operation on the first frequency domain resource, where the first-type operation may be a necessary operation that needs to be performed by the terminal device to maintain a connection to the network device during downlink data transmission. The first-type operation includes at least one of radio resource management RRM measurement, radio link measurement, and receiving first information. In this application, the behavior of the terminal device on the first frequency domain resource is restricted, so that a radio resource control RRC connection can be maintained, and a data transmission process can be simplified. In this way, the power consumption of the terminal device is reduced from the perspective of communication.

## Description

### TECHNICAL FIELD

This application relates to the communications field, and in particular, to a communication method and apparatus.

### BACKGROUND

A fifth-generation (fifth-generation, 5G) mobile communication technology is a new generation cellular mobile communication technology, and is also a quite important technical basis of a next-generation cellular mobile technology. Based on the 5G technology, more devices access a mobile network, and new services and services are emerging.

Services of the 5G technology are diversified, for example, may be oriented to an enhanced mobile broadband (enhanced mobile broadband, eMBB) service, an ultra-reliable low-latency communication (ultra-reliable low-latency communication, URLLC) service, and a massive machine-type communications (massive machine-type communications, mMTC) service.

Different services may have different requirements on a terminal device. For example, compared with the eMBB service, the mMTC service has a higher requirement on power consumption of the terminal device. For example, low power consumption can reduce use costs of a machine-type terminal device. For another example, in a deployment environment (for example, an underground pipeline) of some machine-type terminal devices, it is inconvenient to adjust a power supply system. In this case, the machine-type terminal devices need to have low power consumption, to prolong use time and adapt to a service requirement.

Therefore, how to reduce the power consumption of the terminal device becomes an urgent problem to be resolved currently.

### SUMMARY

Embodiments of this application provide a communication method and apparatus. The method is applied to a communication system. The communication system may be a 5G communication system, a 5.5G communication system, a 6G communication system, a system integrating a plurality of communication systems, or a future evolved communication system. The communication system includes a communication connection between a network device and a terminal device. For example, the network device may be a base station, and the terminal device may be a machine-type terminal. According to this application, power consumption of the terminal device may be reduced from a perspective of communication between the network device and the terminal device.

According to a first aspect, an embodiment of this application provides a communication method applied to a communication apparatus, for example, a terminal device. The method may include: First, the terminal device determines a first frequency domain resource. The first frequency domain resource is a camping resource of the terminal device. The terminal device performs a first-type operation on the first frequency domain resource, where the first-type operation may be a necessary (or basic) operation that needs to be performed by the terminal device to maintain a connection to a network device during downlink data transmission. The first-type operation includes at least one of radio resource management (radio resource management, RRM) measurement (or a reference signal for receiving RRM measurement), radio link measurement (or a reference signal for receiving a radio link), and receiving first information. The first information indicates the terminal device to perform a second-type operation on a second frequency domain resource, and the second-type operation is different from the first-type operation. In this application, behavior of the terminal device on the first frequency domain resource is restricted, and the terminal device performs the first-type operation on the first frequency domain resource, where the first-type operation may be the necessary (or basic) operation that needs to be performed by the terminal device to maintain the connection to the network device during the downlink data transmission, so that a radio resource control (radio resource control, RRC) connection can be maintained, and a data transmission process can be simplified. In this way, power consumption of the terminal device is reduced from a perspective of communication.

In an optional implementation, the performing the first-type operation on the first frequency domain resource may specifically include: receiving the first information on the first frequency domain resource. When the terminal device detects the first information on the first frequency domain resource, it indicates that the network device may have to-be-transmitted downlink data. The terminal device switches from the first frequency domain resource to the second frequency domain resource based on the first information, and then may perform the second-type operation on the second frequency domain resource, to be specific, may receive the downlink data from the network device on the second frequency domain resource. In this example, the first-type operation is performed on the first frequency domain resource. When the terminal device receives the first information on the first frequency domain resource, and switches from the first frequency domain resource to the second frequency domain resource based on the first information, different types of operations (or different behavior) of the terminal device are performed on different frequency domain resources. On the first frequency domain resource, the terminal device does not need to continuously monitor whether there is downlink data transmission or consume power to perform an action such as detecting channel quality for transmitting data. Therefore, it may be ensured that the power consumption of the terminal device is reduced as much as possible when the terminal device has no transmission service of the second-type operation.

In an optional implementation, the first information includes a short message and scheduling information, where the short message indicates a system message update and/or an alert indication, and the scheduling information indicates that there is to-be-received downlink data. In this example, the terminal device needs to consume power of the terminal device when receiving system information. Therefore, the terminal device detects the short message on the first frequency domain resource, to be specific, detects whether there is the system message update or the alarm indication. The terminal device switches to the second frequency domain resource only when the short message indicates that there is a system message indication, to reduce the power consumption. The terminal device switches to the second frequency domain resource only when detecting the scheduling information on the first frequency domain resource, to reduce the power consumption.

In an optional implementation, the first information is carried in downlink control information DCI scrambled by using a power saving radio network temporary identifier PS-RNTI. In this example, the DCI is carried in the scheduling information, so that signaling overheads used by the network device to send the first information can be reduced. For example, the first information is carried in a wake-up signal, and the first information is implemented by using a wake-up indication in the wake-up signal. In this way, frequency resource switching may be implemented by using a small quantity of bits, to ensure data transmission performance.

In an optional implementation, the second-type operation includes: receiving control data from the network device; receiving system information from the network device; receiving service data from the network device; or receiving a random access response from the network device.

In an optional implementation, a bandwidth of the first frequency domain resource is a bandwidth of a synchronization signal block SSB sent by the network device or a bandwidth of a primary synchronization signal PSS and/or a secondary synchronization signal SSS sent by the network device. In this example, from a perspective of reducing power consumption of UE by reducing the bandwidth, for example, the bandwidth of the SSB is 20 RBs, and the bandwidth of the PSS and/or the SSS is 12 RBs, the bandwidth of the first frequency domain resource is reduced. Therefore, the power consumption of the terminal device in an RRC connected state can be further reduced when there is no data transmission service.

In an optional implementation, the determining the first frequency domain resource may further specifically include: receiving configuration information sent by the network device, where the configuration information includes information about a frequency domain resource of a downlink reference signal. The terminal device may use the frequency domain resource of the downlink reference signal as the first frequency domain resource. In this example, the terminal device uses the frequency domain resource of the downlink reference signal as the first frequency domain resource, and implicitly determines the first frequency domain resource without an indication from the network device. This can reduce signaling overheads for indicating the first frequency domain resource by the network device.

In an optional implementation, the performing the first-type operation on the first frequency domain resource may include: performing radio link monitoring RLM on the first frequency domain resource. When a radio link failure is detected on the first frequency domain resource, the terminal device switches to the second frequency domain resource, and continues to perform radio link monitoring on the second frequency domain resource. Alternatively, when a radio link failure is detected on the first frequency domain resource, the terminal device may switch to the second frequency domain resource, and reestablish a radio link between the terminal device and the network device on the second frequency domain resource. In this example, when the terminal device determines that the radio link failure occurs, the terminal device does not initiate cell reselection, but continues to perform radio link monitoring on the second frequency domain resource, or performs radio link recovery on the second frequency domain resource. In this way, power consumption of the terminal device caused by the cell reselection can be reduced.

In an optional implementation, the method further includes: The terminal device determines a third frequency domain resource. The terminal device sends second information on the third frequency domain resource, where the second information indicates the terminal device to perform the second-type operation on the second frequency domain resource.

In an optional implementation, the second information includes random access preamble data and/or a scheduling request.

In an optional implementation, the determining the first frequency domain resource includes: The terminal device determines a frequency domain resource corresponding to the synchronization signal block SSB sent by the network device, and uses the frequency domain resource corresponding to the SSB as the first frequency domain resource; or determines a frequency domain resource corresponding to the PSS and/or the SSS sent by the network device, and uses the frequency domain resource corresponding to the PSS and/or the SSS as the first frequency domain resource. In this example, the terminal device implicitly determines the first frequency domain resource without an indication from the network device, so that signaling overheads for indicating the first frequency domain resource by the network device can be reduced. In addition, from a perspective of reducing power consumption of UE by reducing a bandwidth, for example, a bandwidth of the SSB is 20 RBs, and a bandwidth of the primary synchronization signal PSS and/or the secondary synchronization signal SSS is 12 RBs, a bandwidth of the first frequency domain resource is reduced. Therefore, the power consumption of the terminal device in the RRC connected state can be further reduced when there is no data transmission service.

In an optional implementation, before the terminal device determines the first frequency domain resource, the method further includes: The terminal device receives indication information sent by the network device, where the indication information indicates the first frequency domain resource. The terminal device may determine the first frequency domain resource based on the indication information. In this example, the first frequency domain resource is directly and explicitly indicated by the indication information of the network device, so that the terminal may determine the first frequency domain resource based on an indication of the network device.

In an optional implementation, the indication information includes sub-information of each of a plurality of frequency domain resources. The determining the first frequency domain resource based on the indication information may include: The terminal device may select the first frequency domain resource from the plurality of frequency domain resources based on the sub-information of each frequency domain resource. In this example, when the plurality of frequency domain resources are configured on the terminal device, the terminal device may select the first frequency domain resource from the plurality of frequency domain resources, to reduce indication information overheads.

In an optional implementation, the sub-information includes at least one of an index of a frequency domain resource, a bandwidth of a frequency domain resource, and a location of a frequency domain resource.

In an optional implementation, whether there is the second-type operation is monitored on the second frequency domain resource. If the second-type operation is not detected within preset duration, the terminal device switches from the second frequency domain resource to the first frequency domain resource, so that the RRC connection can be maintained, and the terminal device can camp on the first frequency domain resource, to reduce the power consumption of the terminal device.

In an optional implementation, the method further includes: The terminal device receives a first indication sent by the network device on the second frequency domain resource, where the first indication indicates the terminal device to switch from the second frequency domain resource to the first frequency domain resource. The terminal device switches from the second frequency domain resource to the first frequency domain resource based on the first indication. In this way, the RRC connection can be maintained, and the terminal device can camp on the first frequency domain resource, to reduce the power consumption of the terminal device.

According to a second aspect, an embodiment of this application provides a communication method applied to a communication apparatus, for example, a network device. The method may include: The network device determines a first frequency domain resource. The network device performs a first-type operation for a first terminal on the first frequency domain resource, where the first-type operation includes at least one of sending a reference signal for RRM measurement, sending a reference signal for radio link measurement, and sending first information, and the first information indicates the terminal device to perform a second-type operation for the first terminal on a second frequency domain resource. In this example, the network device sends, on the first frequency domain resource, the reference signal for RRM measurement, so that the first terminal can perform RRM measurement on the first frequency domain resource. The network device sends, on the first frequency domain resource, the reference signal for radio link measurement, so that the first terminal can perform radio link measurement on the first frequency domain resource. The network device sends the first information on the first frequency domain resource, so that the first terminal can receive the first information on the first frequency domain resource. The first terminal performs the first-type operation on the first frequency domain resource. The first-type operation may be a necessary (or basic) operation that needs to be performed by the terminal device to maintain a connection to the network device during downlink data transmission, so that an RRC connection can be maintained, and a data transmission process can be simplified. In this way, power consumption of the terminal device is reduced from a perspective of communication.

In a possible implementation, the performing the first-type operation for the first terminal on the first frequency domain resource includes: sending the first information on the first frequency domain resource, where the first information indicates the first terminal to switch from the first frequency domain resource to the second frequency domain resource. In this example, the first-type operation is performed on the first frequency domain resource. When the network device sends the first information on the first frequency domain resource, the terminal device switches from the first frequency domain resource to the second frequency domain resource based on the first information, so that different types of operations (or different behavior) of the terminal device are performed on different frequency domain resources. On the first frequency domain resource, the terminal device does not need to continuously monitor whether there is downlink data transmission or consume power to perform an action such as detecting channel quality for transmitting data. Therefore, it may be ensured that the power consumption of the terminal device is reduced as much as possible when the terminal device has no transmission service of the second-type operation.

In a possible implementation, the first information includes a short message and scheduling information, where the short message indicates a system message update and/or an alert indication, and the scheduling information indicates that there is to-be-received downlink data.

In a possible implementation, the scheduling information is carried in DCI scrambled by using a PS-RNTI. For example, the scheduling information is carried in a wake-up signal, and the wake-up signal is a sequence. In this example, the DCI carries the scheduling information, so that signaling overheads of the network device can be reduced. In addition, frequency resource switching may be implemented by using a small quantity of bits, to ensure data transmission performance.

In a possible implementation, the second-type operation includes: sending control data; broadcasting system information; sending service data; or sending a random access response.

In a possible implementation, a bandwidth of the first frequency domain resource is a bandwidth of a synchronization signal block SSB sent by the network device or a bandwidth of a PSS and/or an SSS sent by the network device. In this example, from a perspective of reducing power consumption of UE by reducing the bandwidth, for example, the bandwidth of the SSB is 20 RBs, and the bandwidth of the PSS and/or the SSS is 12 RBs, the bandwidth of the first frequency domain resource is reduced. Therefore, the power consumption of the terminal device in an RRC connected state can be further reduced when there is no data transmission service.

According to a third aspect, an embodiment of this application provides a communication apparatus. For example, the communication apparatus is a terminal device. The communication apparatus includes a processing module and a transceiver module. The processing module is configured to determine a first frequency domain resource. The transceiver module is configured to perform a first-type operation on the first frequency domain resource determined by the processing module, where the first-type operation includes at least one of receiving a reference signal for RRM measurement, receiving a reference signal for radio link measurement, and receiving first information, the first information indicates the terminal device to perform a second-type operation on a second frequency domain resource, and the second-type operation is different from the first-type operation. In this application, behavior of the terminal device on the first frequency domain resource is restricted, and the terminal device performs the first-type operation on the first frequency domain resource, where the first-type operation may be a necessary (or basic) operation that needs to be performed by the terminal device to maintain a connection to a network device during downlink data transmission, so that an RRC connection can be maintained, and a data transmission process can be simplified. In this way, power consumption of the terminal device is reduced from a perspective of communication.

In an optional implementation, the transceiver module is further configured to receive the first information on the first frequency domain resource. The processing module is further configured to switch from the first frequency domain resource to the second frequency domain resource based on the first information. When the terminal device detects the first information on the first frequency domain resource, it indicates that the network device may have to-be-transmitted downlink data. The terminal device switches from the first frequency domain resource to the second frequency domain resource based on the first information, and then may perform the second-type operation on the second frequency domain resource, to be specific, may receive the downlink data from the network device on the second frequency domain resource. In this example, the first-type operation is performed on the first frequency domain resource. When the terminal device receives the first information on the first frequency domain resource, and switches from the first frequency domain resource to the second frequency domain resource based on the first information, different types of operations (or different behavior) of the terminal device are performed on different frequency domain resources. On the first frequency domain resource, the terminal device does not need to continuously monitor whether there is downlink data transmission or consume power to perform an action such as detecting channel quality for transmitting data. Therefore, it may be ensured that the power consumption of the terminal device is reduced as much as possible when the terminal device has no transmission service of the second-type operation.

In an optional implementation, the first information includes a short message and scheduling information, where the short message indicates a system message update and/or an alert indication, and the scheduling information indicates whether there is to-be-received downlink data. In this example, the terminal device needs to consume power of the terminal device when receiving system information. Therefore, the terminal device detects the short message on the first frequency domain resource, to be specific, detects whether there is the system message update or the alarm indication. The terminal device switches to the second frequency domain resource only when the short message indicates that there is a system message indication, to reduce the power consumption. The terminal device switches to the second frequency domain resource only when detecting the scheduling information on the first frequency domain resource, to reduce the power consumption.

In an optional implementation, the first information is carried in DCI scrambled by using a PS-RNTI. In this example, the DCI is carried in the scheduling information, so that signaling overheads used by the network device to send the first information can be reduced. For example, the first information is carried in a wake-up signal, and the first information is implemented by using a wake-up indication in the wake-up signal. In this way, frequency resource switching may be implemented by using a small quantity of bits, to ensure data transmission performance.

In an optional implementation, the second-type operation includes: receiving control data from the network device; receiving system information from the network device; receiving service data from the network device; or receiving a random access response from the network device

In an optional implementation, a bandwidth of the first frequency domain resource is a bandwidth of an SSB sent by the network device or a bandwidth of a PSS and/or an SSS sent by the network device. In this example, from a perspective of reducing the power consumption of the terminal by reducing the bandwidth, for example, the bandwidth of the SSB is 20 RBs, and the bandwidth of the PSS and/or the SSS is 12 RBs, the bandwidth of the first frequency domain resource is reduced. Therefore, the power consumption of the terminal device in an RRC connected state can be further reduced when there is no data transmission service.

In an optional implementation, the transceiver module is further configured to receive, on the first frequency domain resource, a reference signal for RLM. The transceiver module is further configured to: when a radio link failure is detected on the first frequency domain resource, receive, on the second frequency domain resource, the reference signal for radio link monitoring; or reestablish a radio link between the terminal device and the network device on the second frequency domain resource. In this example, when the terminal device determines that the radio link failure occurs, the terminal device does not initiate cell reselection, but continues to perform radio link monitoring on the second frequency domain resource, or performs radio link recovery on the second frequency domain resource. In this way, power consumption of the terminal device caused by the cell reselection can be reduced.

According to a fourth aspect, an embodiment of this application provides a communication apparatus. For example, the communication apparatus is a network device. The communication apparatus includes a processing module and a transceiver module. The processing module is configured to determine a first frequency domain resource. The transceiver module is configured to perform a first-type operation for a first terminal on the first frequency domain resource determined by the processing module, where the first-type operation includes at least one of sending a reference signal for RRM measurement, sending a reference signal for radio link measurement, and sending first information, and the first information indicates the terminal device to perform a second-type operation for the first terminal on a second frequency domain resource. In this example, the network device determines the first frequency domain resource, so that the first terminal may perform the first-type operation on the first frequency domain resource. The first-type operation may be a necessary (or basic) operation that needs to be performed by the terminal device to maintain a connection to the network device during downlink data transmission. Behavior of the terminal device on the first frequency domain resource is restricted, and the terminal device performs the first-type operation on the first frequency domain resource, so that an RRC connection can be maintained, and a data transmission process is simplified. In this way, power consumption of the terminal device is reduced from a perspective of communication.

In a possible implementation, the transceiver module is further configured to send the first information on the first frequency domain resource, where the first information indicates the first terminal device to switch from the first frequency domain resource to the second frequency domain resource. In this example, the first terminal device needs to consume power of the terminal device when receiving system information. Therefore, the terminal device detects a short message on the first frequency domain resource, to be specific, detects whether there is a system message update or an alarm indication. The terminal device switches to the second frequency domain resource only when the short message indicates that there is a system message indication, to reduce the power consumption. The terminal device switches to the second frequency domain resource only when detecting scheduling information on the first frequency domain resource, to reduce the power consumption.

In a possible implementation, the first information includes the short message and the scheduling information, where the short message indicates the system message update and/or the alert indication, and the scheduling information indicates that there is to-be-received downlink data.

In a possible implementation, the first information is carried in downlink control information scrambled by using a PS-RNTI.

In a possible implementation, the second-type operation includes: sending control data; broadcasting system information; sending service data; or sending a random access response.

In a possible implementation, a bandwidth of the first frequency domain resource is a bandwidth of a synchronization signal block SSB sent by the network device or a bandwidth of a PSS and/or an SSS sent by the network device. In this example, from a perspective of reducing power consumption of UE by reducing the bandwidth, for example, the bandwidth of the SSB is 20 RBs, and the bandwidth of the PSS and/or the SSS is 12 RBs, the bandwidth of the first frequency domain resource is reduced. Therefore, the power consumption of the terminal device in an RRC connected state can be further reduced when there is no data transmission service.

According to a fifth aspect, an embodiment of this application provides a communication apparatus. For example, the communication apparatus is a terminal device. The communication apparatus includes a processor and a transceiver, and the processor is coupled to the transceiver.

The processor is configured to determine a first frequency domain resource. The transceiver is configured to perform a first-type operation on the first frequency domain resource, where the first-type operation includes at least one of radio resource management RRM measurement, radio link measurement, and receiving first information, the first information indicates the terminal device to perform a second-type operation on a second frequency domain resource, and the second-type operation is different from the first-type operation. In this application, behavior of the terminal device on the first frequency domain resource is restricted, and the terminal device performs the first-type operation on the first frequency domain resource, where the first-type operation may be a necessary (or basic) operation that needs to be performed by the terminal device to maintain a connection to a network device during downlink data transmission, so that a radio resource control RRC connection can be maintained, and a data transmission process can be simplified. In this way, power consumption of the terminal device is reduced from a perspective of communication.

In a possible implementation, the transceiver is further configured to receive the first information on the first frequency domain resource. The processor is further configured to switch from the first frequency domain resource to the second frequency domain resource based on the first information. When the terminal device detects the first information on the first frequency domain resource, it indicates that the network device may have to-be-transmitted downlink data. The terminal device switches from the first frequency domain resource to the second frequency domain resource based on the first information, and then may perform the second-type operation on the second frequency domain resource, to be specific, may receive the downlink data from the network device on the second frequency domain resource. In this example, the first-type operation is performed on the first frequency domain resource. When the transceiver receives the first information on the first frequency domain resource, and the processor switches from the first frequency domain resource to the second frequency domain resource based on the first information, different types of operations (or different behavior) of the terminal device are performed on different frequency domain resources. On the first frequency domain resource, the terminal device does not need to continuously monitor whether there is downlink data transmission or consume power to perform an action such as detecting channel quality for transmitting data. Therefore, it may be ensured that the power consumption of the terminal device is reduced as much as possible when the terminal device has no transmission service of the second-type operation.

In a possible implementation, the first information includes a short message and scheduling information, where the short message indicates a system message update and/or an alert indication, and the scheduling information indicates that there is to-be-received downlink data.

In a possible implementation, the first information is carried in DCI scrambled by using a PS-RNTI. In this example, the DCI is carried in the scheduling information, so that signaling overheads used by the network device to send the first information can be reduced. For example, the first information is carried in a wake-up signal, and the first information is implemented by using a wake-up indication in the wake-up signal. In this way, frequency resource switching may be implemented by using a small quantity of bits, to ensure data transmission performance.

In a possible implementation, the second-type operation includes: receiving control data from the network device; receiving system information from the network device; receiving service data from the network device; or receiving a random access response from the network device.

In a possible implementation, a bandwidth of the first frequency domain resource is a bandwidth of a synchronization signal block SSB sent by the network device or a bandwidth of a PSS and/or an SSS sent by the network device. In this example, from a perspective of reducing power consumption of UE by reducing the bandwidth, for example, the bandwidth of the SSB is 20 RBs, and the bandwidth of the PSS and/or the SSS is 12 RBs, the bandwidth of the first frequency domain resource is reduced. Therefore, the power consumption of the terminal device in an RRC connected state can be further reduced when there is no data transmission service.

In a possible implementation, the transceiver is further configured to receive configuration information sent by the network device, where the configuration information includes information about a frequency domain resource of a downlink reference signal. The processor is further configured to use the frequency domain resource of the downlink reference signal as the first frequency domain resource. In this example, the terminal device uses the frequency domain resource of the downlink reference signal as the first frequency domain resource, and implicitly determines the first frequency domain resource without an indication from the network device. This can reduce signaling overheads for indicating the first frequency domain resource by the network device.

According to a sixth aspect, an embodiment of this application provides a communication apparatus. For example, the communication apparatus may be a network device. The communication apparatus includes a processor and a transceiver, and the processor is coupled to the transceiver.

The processor is configured to determine a first frequency domain resource. The transceiver is configured to perform a first-type operation for a first terminal on the first frequency domain resource, where the first-type operation includes at least one of sending a reference signal for radio resource management RRM measurement, sending a reference signal for radio link measurement, and sending first information, and the first information indicates the terminal device to perform a second-type operation for the first terminal on a second frequency domain resource. In this example, the network device determines the first frequency domain resource, so that the first terminal may perform the first-type operation on the first frequency domain resource. The first-type operation may be a necessary (or basic) operation that needs to be performed by the terminal device to maintain a connection to the network device during downlink data transmission. Behavior of the terminal device on the first frequency domain resource is restricted, and the terminal device performs the first-type operation on the first frequency domain resource, so that an RRC connection can be maintained, and a data transmission process is simplified. In this way, power consumption of the terminal device is reduced from a perspective of communication.

In a possible implementation, the transceiver is further configured to send the first information on the first frequency domain resource, where the first information indicates the first terminal to switch from the first frequency domain resource to the second frequency domain resource. When the terminal device detects the first information on the first frequency domain resource, it indicates that the network device may have to-be-transmitted downlink data. The terminal device switches from the first frequency domain resource to the second frequency domain resource based on the first information, and then may perform the second-type operation on the second frequency domain resource, to be specific, may receive the downlink data from the network device on the second frequency domain resource. In this example, the first-type operation is performed on the first frequency domain resource. When the transceiver receives the first information on the first frequency domain resource, and the processor switches from the first frequency domain resource to the second frequency domain resource based on the first information, different types of operations (or different behavior) of the terminal device are performed on different frequency domain resources. On the first frequency domain resource, the terminal device does not need to continuously monitor whether there is downlink data transmission or consume power to perform an action such as detecting channel quality for transmitting data. Therefore, it may be ensured that the power consumption of the terminal device is reduced as much as possible when the terminal device has no transmission service of the second-type operation.

In a possible implementation, the first information includes a short message and scheduling information, where the short message indicates a system message update and/or an alert indication, and the scheduling information indicates that there is to-be-received downlink data.

In a possible implementation, the first information is carried in DCI scrambled by using a PS-RNTI. In this example, the DCI is carried in the scheduling information, so that signaling overheads used by the network device to send the first information can be reduced. For example, the first information is carried in a wake-up signal, and the first information is implemented by using a wake-up indication in the wake-up signal. In this way, frequency resource switching may be implemented by using a small quantity of bits, to ensure data transmission performance.

In a possible implementation, the second-type operation includes: sending control data; broadcasting system information; sending service data; or sending a random access response.

In a possible implementation, a bandwidth of the first frequency domain resource is a bandwidth of an SSB sent by the network device or a bandwidth of a PSS and/or an SSS sent by the network device. In this example, from a perspective of reducing power consumption of UE by reducing the bandwidth, for example, the bandwidth of the SSB is 20 RBs, and the bandwidth of the PSS and/or the SSS is 12 RBs, the bandwidth of the first frequency domain resource is reduced. Therefore, the power consumption of the terminal device in an RRC connected state can be further reduced when there is no data transmission service.

According to a seventh aspect, an embodiment of this application provides a communication system. The communication system includes a network device and a terminal device. The terminal device is configured to perform the method according to the first aspect, and the network device is configured to perform the method according to the second aspect.

According to an eighth aspect, an embodiment of this application provides a computer-readable medium. The computer-readable storage medium is configured to store a computer program. When the computer program is run on a computer, the computer is enabled to perform the method according to the first aspect, or the computer is enabled to perform the method according to the second aspect.

According to a ninth aspect, an embodiment of this application provides a chip, including a processor and a communication interface. The processor is configured to read instructions to perform the method according to the first aspect, and the processor is configured to read instructions to perform the method according to the second aspect.

According to a tenth aspect, an embodiment of this application provides a computer program product. When the computer program product is executed by a computer, a function of the terminal device in the first aspect is implemented. Alternatively, when the computer program product is executed by a computer, a function of the network device in the second aspect is implemented.

### BRIEF DESCRIPTION OF DRAWINGS

FIG. 1 is a schematic diagram of an example of a communication system according to an embodiment of this application;
FIG. 2 is a schematic flowchart of steps of an embodiment of a communication method according to embodiments of this application;
FIG. 3A is an example diagram of 4-step random access according to an embodiment of this application;
FIG. 3B is an example diagram of 2-step random access according to an embodiment of this application;
FIG. 4 is an example diagram of configuring different BWPs for different terminals according to an embodiment of this application;
FIG. 5A is a schematic diagram of switching a frequency domain resource by a terminal device according to an embodiment of this application;
FIG. 5B is an example diagram in which a bandwidth of a first frequency domain resource is a bandwidth of a synchronization signal block according to an embodiment of this application;
FIG. 5C is an example diagram in which a bandwidth of a first frequency domain resource is a bandwidth of a primary synchronization signal or a secondary synchronization signal according to an embodiment of this application;
FIG. 6 is a schematic flowchart of steps of another embodiment of a communication method according to embodiments of this application;
FIG. 7 is a schematic flowchart of steps of another embodiment of a communication method according to embodiments of this application;
FIG. 8 is a schematic diagram of a structure of an embodiment of an apparatus according to embodiments of this application;
FIG. 9 is a schematic diagram of a structure of another embodiment of an apparatus according to embodiments of this application; and
FIG. 10 is a schematic diagram of a structure of another embodiment of an apparatus according to embodiments of this application.

### DESCRIPTION OF EMBODIMENTS

The following describes technical solutions in embodiments of this application with reference to the accompanying drawings in embodiments of this application. The term "and/or" in this application may describe an association relationship between associated objects, and represents that there may be three relationships. For example, A and/or B may represent the following three cases: Only A exists, both A and B exist, and only B exists. In addition, the character "/" in this application generally indicates an "or" relationship between the associated objects.

In the specification, claims, and the accompanying drawings of this application, the terms "first", "second", and the like are intended to distinguish between similar objects but are not necessarily for describing a specific order or sequence. In addition, the terms "include", "have", and any variant thereof mean to cover the non-exclusive inclusion, for example, a process, method, system, product, or device that includes a list of steps or modules is not necessarily limited to those expressly listed steps or modules, but may include other steps or modules not expressly listed or inherent to such a process, method, product, or device.

Embodiments of this application provide a communication method. The method is for reducing power consumption of a terminal device. First, the terminal device determines a first frequency domain resource, and behavior of the terminal device on the first frequency domain resource is restricted. The terminal device performs a first-type operation on the first frequency domain resource, where the first-type operation may be a necessary (or basic) operation that needs to be performed by the terminal device to maintain a connection to a network device during downlink data transmission. The first-type operation includes at least one of RRM measurement, radio link measurement, and receiving first information. In this application, the behavior of the terminal device on the first frequency domain resource is restricted, so that an RRC connection can be maintained, and a data transmission process can be simplified. In this way, the power consumption of the terminal device is reduced from a perspective of communication.

The method is applied to a communication system. The communication system includes but is not limited to a 4th generation (4th generation, 4G) communication system, a 4.5G communication system, a 5G communication system, a 5.5G communication system, a 6G communication system, a system integrating a plurality of communication systems, or a future evolved communication system, for example, a long term evolution (long term evolution, LTE) system, a new radio (new radio, NR) system, a communication system related to the 3rd generation partnership project (3rd generation partnership project, 3GPP), and another such communication system.

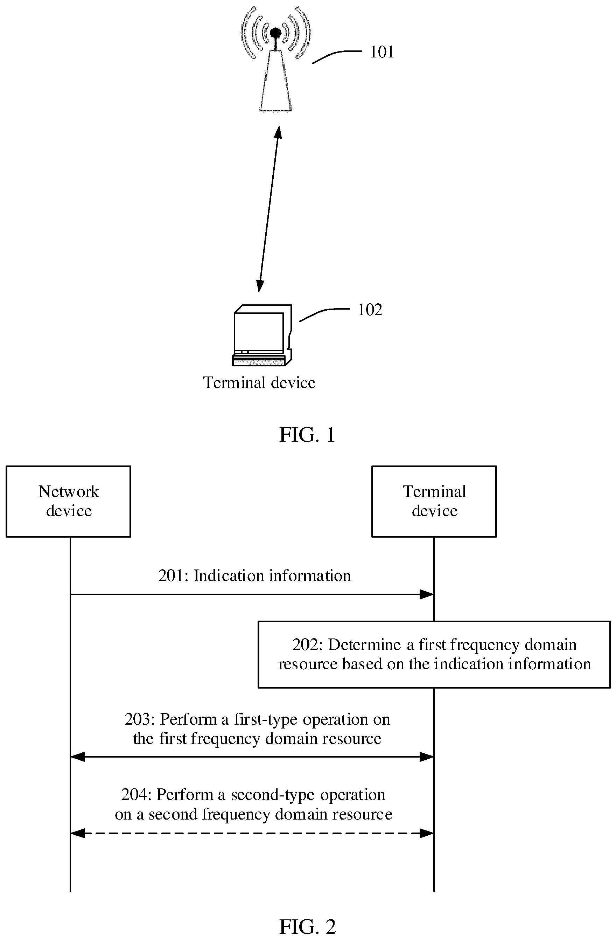

Refer to FIG. 1. The communication system includes a network device 101 and a terminal device 102. The network device 101 is communicatively connected to the terminal device 102. The terminal device 102 determines a first frequency domain resource, where the first frequency domain resource may be understood as a camping frequency domain resource of the terminal device 102. The terminal device 102 performs a first-type operation on the first frequency domain resource, where the first-type operation includes at least one of receiving a reference signal for RRM measurement from the network device, receiving a reference signal for radio link measurement from the network device, and receiving first information. When the terminal device needs to perform another type of operation, the terminal device needs to switch to a second frequency domain resource for performing. In other words, on the first frequency domain resource on which the terminal device camps, the terminal device may perform three operations: RRM measurement, radio link measurement, and receiving the first information, and an operation (a second-type operation) other than the first-type operation needs to be switched to the second frequency domain resource for performing. In this application, the first frequency domain resource may be understood as a frequency domain resource on which the terminal device performs the first-type operation in an RRC connected state, or may be understood as a frequency domain resource on which the terminal device camps in an RRC idle state (idle state) or an RRC inactive state (inactive state). Switching in this application means that the terminal device performs communication on a frequency domain resource (for example, the first frequency domain resource) before a time unit, and the terminal device performs communication on another frequency domain resource (for example, the second frequency domain resource) after the time point.

In this application, the terminal device may be a first-type terminal device, for example, an NR reduced capability (NR reduced capability, NR RedCap) terminal device. Currently, in 3GPP NR release 17 (Release 17), the NR RedCap terminal device, as an implementation of a machine-type terminal device, has a clear requirement on power consumption. For example, a battery life of a wireless sensor is required to last for several years. A battery life of a wearable device is required to last for one to two weeks. The first-type terminal device is for representing a terminal device that has a lower data transmission capability or lower costs than a second-type terminal device. It should be noted that NR RedCap may alternatively be described by using another term, and a terminal device represented by using the another term has a same capability as the NR RedCap terminal device. A difference between the first-type terminal device and the second-type terminal device (for example, an NR Rel-15 or Rel-16 terminal device) includes at least one of the following:
1. Different bandwidth capabilities. For example, the second-type terminal device may support data transmission with the network device by using a frequency domain resource of at most 100 MHz on one carrier simultaneously, but the first-type terminal device may support data transmission with the network device by using a frequency domain resource of at most 20 MHz, 10 MHz, or 5 MHz on one carrier simultaneously.
2. Different quantities of transceiver antennas. For example, a minimum antenna configuration supported by the second-type terminal device is 4T2R. To be specific, in the minimum antenna configuration, four receive antennas are for receiving downlink data, and two transmit antennas are for sending uplink data. However, a maximum antenna configuration supported by the first-type terminal device is lower than 4T2R. For example, first-type UE supports only 2R1T, may support 1R1T, or may support 2R2T.
3. Different maximum uplink transmit powers. For example, a maximum uplink transmit power of the second-type terminal device may be 23 dBm or 26 dBm, but a maximum uplink transmit power of the first-type terminal device may be a value in 4 dBm to 20 dBm.
4. The first-type terminal device and the second-type terminal device correspond to different protocol versions. For example, the NR Rel-15 or NR Rel-16 terminal device may be considered as the second-type terminal device, but the first-type terminal device may be considered as an NR Rel-17 terminal device.
5. The first-type terminal device and the second-type terminal device support different carrier aggregation (carrier aggregation, CA) capabilities. For example, the second-type terminal device may support carrier aggregation, but the first-type terminal device does not support carrier aggregation. For another example, both the first-type terminal device and the second-type terminal device support carrier aggregation, but a maximum quantity of carriers for aggregation supported by the second-type terminal device simultaneously is greater than a maximum quantity of carriers for aggregation supported by the first-type terminal device simultaneously. For example, the second-type terminal device may support aggregation of a maximum of five carriers or 32 carriers simultaneously, but the first-type terminal device supports aggregation of a maximum of two carriers simultaneously.
6. The second-type terminal device supports frequency division duplex (frequency division duplex, FDD), but the first-type terminal device supports half-duplex FDD.
7. The second-type terminal device and the first-type terminal device have different processing capabilities. A processing capability of the first-type terminal device is lower than that of the second-type terminal device. For example, the first-type terminal device and the second-type terminal device have different data processing time capabilities. For example, a minimum latency between receiving downlink data by the second-type terminal device and sending a feedback on the downlink data is less than a minimum latency between receiving downlink data by the first-type terminal device and sending a feedback on the downlink data. A minimum latency between sending uplink data by the second-type terminal device and receiving a feedback on the uplink data is less than a minimum latency between sending uplink data by the first-type terminal device and receiving a feedback on the uplink data. For another example, a maximum transport block size (transmission block size, TBS) that can be processed by the first-type terminal device is less than a TBS that can be processed by the second-type terminal device. For another example, a maximum downlink modulation order (for example, 64QAM) that can be processed by the first-type terminal device is less than a maximum downlink modulation order (for example, 256QAM) that can be processed by the second-type terminal device, and/or a maximum uplink modulation order (for example, 64QAM or 16QAM) that can be processed by the first-type terminal device is less than a maximum uplink modulation order (for example, 256QAM or 64QAM) that can be processed by the second-type terminal device. For another example, a quantity of hybrid automatic repeat requests (hybrid automatic repeat request, HARQ) supported by the first-type terminal device is less than a quantity of HARQs supported by the second-type terminal device.
8. A transmission rate of an uplink (or downlink) transmission peak of the second-type terminal device is different from an uplink (or downlink) transmission peak rate corresponding to the first-type terminal device. The uplink (or downlink) transmission peak rate corresponding to the first-type terminal device is lower than the transmission rate of the uplink (or downlink) transmission peak of the second-type terminal device.

It should be noted that the power consumption reduction method in this application may be applied to the first-type terminal device, but is also applicable to another terminal device to reduce power consumption, for example, terminal devices in NR Rel-17 and later NR systems or a terminal device in a future communication system. For example, the terminal in this application may alternatively be a terminal in industrial control (industrial control), a vehicle-mounted terminal device, a terminal in self driving (self driving), a terminal in assisted driving, a terminal in telemedicine (telemedicine), a terminal in a smart grid (smart grid), a terminal in transportation safety (transportation safety), a terminal in a smart city (smart city), a terminal in a smart home (smart home), or the like. An application scenario is not limited in embodiments of this application. Alternatively, the terminal may be a mobile phone (mobile phone), a tablet computer (Pad), a computer with a wireless transceiver function, a virtual reality (virtual reality, VR) terminal device, an augmented reality (augmented reality, AR) terminal device, or the like. The terminal may also be sometimes referred to as a terminal device, user equipment (user equipment, UE), an access terminal device, a vehicle-mounted terminal, an industrial control terminal, a UE unit, a UE station, a mobile station, a remote station, a remote terminal device, a mobile device, a UE terminal device, a wireless communication device, a machine terminal, a UE agent, a UE apparatus, or the like. The terminal may be fixed or mobile.

In addition, if classification is performed from a function aspect, the terminal device in this application is a device that performs data communication with the network device. For example, a relay (Relay) device may also be considered as the terminal device in this application.

In this application, the network device includes but is not limited to: an evolved NodeB (NodeB or eNB or eNodeB, evolved NodeB) in LTE, a gNodeB (gNodeB or gNB) or a transmission reception point (transmission receiving point/transmission reception point, TRP) in NR, a base station that subsequently evolves in 3GPP, an access node in a Wi-Fi system, a wireless relay node, a wireless backhaul node, or the like. The base station may be a macro base station, a micro base station, a picocell base station, a small cell, a relay station, a balloon station, a home base station (Femto), a home evolved NodeB (home evolved NodeB, HeNB), or the like. A plurality of base stations may support the foregoing networks using a same technology, or may support the foregoing networks using different technologies. The base station may include one or more co-site or non-co-site TRPs. The network device may alternatively be a radio controller, a central unit (central unit, CU), and/or a distributed unit (distributed unit, DU) in a cloud radio access network (cloud radio access network, CRAN) scenario. That the network device is a base station is used as an example for description below. The plurality of network devices may be base stations of a same type, or may be base stations of different types. The terminal device may communicate with a plurality of base stations using different technologies. For example, the terminal device may communicate with a base station supporting an LTE network, may communicate with a base station supporting a 5G network, or may further support dual connections to the base station in the LTE network and the base station in the 5G network.

To better understand this application, the following first describes words in this application.

A first-type operation may be a necessary (or basic) operation (or behavior) that needs to be performed to maintain a connection between a terminal device and a network device. The first-type operation includes at least one of transmitting a reference signal for radio resource management RRM measurement, transmitting a reference signal for radio link measurement, and transmitting first information. The first information indicates the terminal device to switch to a second frequency domain resource. Further, the terminal device may perform a second-type operation on the second frequency domain resource. Optionally, the radio link measurement includes radio link monitoring (radio link monitoring, RLM) measurement and/or beam measurement. Optionally, the first information includes a short message (short message) and scheduling information (scheduling information), where the short message indicates a system message update and/or an alert indication, and the scheduling information indicates that there is to-be-received downlink data. Optionally, the first information may further include some information indicated by paging downlink control information (paging downlink control information, paging DCI) in a future communication system. The paging DCI is transmitted through a physical downlink control channel (physical downlink control channel, PDCCH).

The second-type operation includes transmitting specific data of the terminal device and transmitting a system broadcast message. The transmitting specific data of the terminal device includes: receiving control data from the network device, where the control data is control information for scheduling unicast service data and/or multicast service data of the terminal device, and the control information does not include the first information in the first-type operation, for example, the control data is control information carried on the PDCCH or a physical downlink shared channel (physical downlink shared channel, PDSCH), and is for scheduling unicast service data and/or multicast service data; receiving service data from the network device; or receiving a random access response from the network device, for example, message 2 (Msg2), message 4 (Msg4), or message B (MsgB) in a random access process. The specific data is data or information corresponding to the terminal device, and includes but is not limited to the control data, the service data, the random access response, or the like. The control data is the control information for scheduling the unicast service data and/or the multicast service data of the terminal device, and the control information does not include the first information in the first-type operation.

It may be understood that the "type operation" in the first-type operation and the second-type operation may be understood as a communication type or device behavior. For example, the first-type operation may be understood as first-type communication performed by a device (for example, the terminal device) on a first frequency domain resource or first behavior of a device (for example, the terminal device) on a first frequency domain resource. The second-type operation may be understood as second-type communication performed by a device (for example, the terminal device) on the second frequency domain resource or second behavior of a device (for example, the terminal device) on the second frequency domain resource, or the like.

A frequency domain resource includes N consecutive frequency domain resource units (for example, REs or RBs), or may include N inconsecutive frequency domain resource units. The frequency domain resource unit may be represented by a subcarrier, a resource element (resource element, RE), a resource block (resource block, RB), or another frequency domain resource unit. For example, the first frequency domain resource (or the second frequency domain resource) may be understood as a bandwidth part (bandwidth part, BWP). For example, in this application, the first frequency domain resource may also be referred to as a first BWP, and the second frequency domain resource may also be referred to as a second BWP. In this embodiment of this application, distinguishing between the first frequency domain resource and the second frequency domain resource lies in two aspects: 1. The first frequency domain resource and the second frequency domain resource are frequency domain resources at different locations, and a frequency resource included in the first frequency domain resource and a frequency resource included in the second frequency resource may partially overlap or may not overlap. 2. Behavior on the first frequency domain resource is restricted, the first-type operation is performed on the first frequency domain resource, and the second-type operation is mainly performed on the second frequency domain resource. In some cases, the first-type operation (for example, RLM measurement data) may also be performed on the second frequency domain resource. Because the terminal device performs different operations on the first frequency domain resource and the second frequency domain resource, compared with communication with the network device by using the second frequency domain resource, communication with the network device by using the first frequency domain resource consumes a lower power of the terminal device. In a possible implementation, a bandwidth of the second frequency domain resource is greater than a bandwidth of the first frequency domain resource, so that compared with communication with the network device by using the second frequency domain resource, communication with the network device by using the first frequency domain resource consumes a lower power of the terminal device. The BWP may be used as an example of the frequency domain resource in this application for description. For example, in this application, the first frequency domain resource may also be referred to as the first BWP, and the second frequency domain resource may also be referred to as the second BWP. Optionally, the first BWP may be an initial downlink BWP corresponding to a first-type terminal device, or a default BWP that corresponds to the first-type terminal device and that is for maintaining the first-type operation with the network device when there is no service data transmission.

A BWP is a combination of a plurality of consecutive resource RBs in a carrier. The network device allocates the BWP to UE, to implement flexible transmission bandwidth configuration between the network device and the UE. Each BWP may correspond to a specific numerology (numerology). Different BWPs may be configured for different UE. The UE does not need to know a transmission bandwidth on a network device side, and only needs to support BWP bandwidth information configured for the UE. When the UE is in an idle state (idle state), data transmission between the UE and the network device is implemented by using an initial BWP. After the UE enters a connected state, data transmission may be performed with the network device by using a dedicated (dedicated) BWP configured by the network device. For example, the UE may support configuration of four dedicated BWPs. However, at any moment, only one BWP is in an active state. That is, each time of data transmission between the network device and the UE is performed in one BWP. It should be noted that a BWP is a concept within a carrier. If the UE supports carrier aggregation (carrier aggregation, CA), each carrier may support a configuration of a maximum of four dedicated BWPs. In this application, a concept of a cell may be understood as a carrier.

An uplink means that the terminal device performs transmission to the network device.

A downlink means that the network device performs transmission to the terminal device.

Refer to FIG. 2. An embodiment of a communication method provided in embodiments of this application is as follows.

Step 201: A network device sends indication information to a terminal device. Correspondingly, the terminal device receives the indication information.

In a first implementation, the terminal device is in an RRC connected state, an RRC idle state, or an RRC inactive state. The terminal device receives the indication information from the network device. The indication information indicates a location of the first frequency domain resource. The indication information may include at least two of a frequency start point, a bandwidth, and a frequency end point of the first frequency domain resource.

In this implementation, the network device may explicitly indicate the location of the first frequency domain resource by using the indication information, and the terminal device determines the first frequency resource based on the indication information. For example, the terminal device uses a frequency domain resource (for example, a BWP) indicated in the indication information as the first frequency domain resource.

In a second implementation, the network device configures a plurality of BWPs, and the terminal device in the RRC connected state receives the indication information from the network device, where the indication information includes sub-information of each BWP. The sub-information includes location information of the BWP, and the location information may include at least two of a frequency start point, a bandwidth, and a frequency end point. Optionally, the sub-information of the BWP may further include an index of the BWP.

The indication information may be information that may be sent by the network device by using RRC dedicated signaling, or may be indicated by physical layer signaling or medium access control (medium access control, MAC) signaling. The physical layer signaling includes information notified through a PDCCH or a PDSCH.

Step 202: The terminal device determines the first frequency domain resource based on the indication information.

In the foregoing first implementation, the terminal device may determine the first frequency domain resource based on the indication information from the network device. Specifically, when the terminal device is in the RRC connected state, the network device may send the indication information by using the RRC dedicated signaling. For example, the indication information may be configuration information for configuring a default BWP, and the first frequency domain resource may be a default BWP configured by the network device for the terminal device. When the terminal device is in the RRC inactive state, the network device may send the indication information by using RRC signaling in an RRC connection release process. When the terminal device is in the RRC idle state, the network device may indicate the first frequency domain resource by using system broadcast information, for example, may indicate the first frequency domain resource by using content indicate by a control field pdcch-ConfigSIB 1 in a master information block (master information block, MIB). To be specific, pdcch-ConfigSIB1 may indicate frequency domain resource configuration information of a control resource set (control resource set, CORESET) corresponding to system broadcast information transmitted on the first frequency domain resource, and a frequency domain resource configuration of the CORESET may directly correspond to a configuration of the first frequency domain resource.

In the foregoing second implementation, the network device configures a plurality of frequency domain resources (for example, the plurality of BWPs). That is, the network device may not indicate a specific BWP that is used as the first frequency domain resource. In this case, the terminal device may determine the first frequency domain resource in the following several manners. For example, the terminal device may randomly select one of the plurality of BWPs as the first frequency domain resource. For another example, the terminal device determines a default BWP as the first frequency domain resource in a preset manner. For example, the terminal device may use a BWP with a smallest index as the first frequency domain resource (for example, use a BWP with an index of 0 as the first frequency domain resource), or use a BWP with a smallest bandwidth as the first frequency domain resource. The bandwidth is also a factor that affects power consumption of the terminal device. The terminal selects the BWP with the smallest bandwidth as the first frequency domain resource, so that an operating bandwidth of the terminal device is the smallest in the plurality of BWPs. This effectively reduces the power consumption of the terminal device.

Step 203: The terminal device performs a first-type operation on the first frequency domain resource.

The terminal device is in the RRC connected state or the RRC inactive state. The terminal device performs the first-type operation on the first frequency domain resource. The first-type operation is at least one of RRM measurement, RLM measurement, beam measurement (beam measurement), receiving a short message, and receiving scheduling information. In a possible implementation, the terminal device performs only the first-type operation on the first frequency domain resource, and does not perform a second-type operation. Alternatively, it may be understood as that the first frequency resource supports only the first-type operation.

The terminal device is in the RRC idle state or the inactive state. The terminal device performs the first-type operation on the first frequency domain resource. The first-type operation is at least one of RRM measurement, receiving a short message, and receiving scheduling information. For example, the terminal device is in the RRC idle state or the RRC inactive state. After receiving the short message indicating a system message update, the terminal device may switch to a second frequency domain resource to receive an updated system message. When receiving the scheduling information, and the scheduling information indicates that there is to-be-transmitted downlink data (for example, data transmission information carried through paging), the terminal device may switch to a second frequency domain resource to receive downlink service data.

It may be understood that, when the terminal device is in the RRC connected state, the terminal device may perform data transmission with the network device on another frequency domain resource in addition to the first frequency domain resource. However, a type of data transmitted by the terminal on the first frequency domain resource is restricted. Not all types of data can be transmitted on the first frequency domain resource, but only some types of data can be transmitted. In other words, the first frequency domain resource has a characteristic. In this application, the first frequency domain resource supports the necessary first-type operation of the terminal device, and the first frequency domain resource also supports transmission of related configuration information required by the first-type operation, for example, supports transmission of a reference signal for the RRM measurement, transmission of a reference signal for the RLM or beam measurement, and transmission of a reference signal for demodulating first information.

For example, only the RRM measurement and the RLM measurement are supported on the first frequency domain resource, and the terminal device may periodically switch to another frequency domain resource to detect whether there is to-be-received downlink data and/or a system message. For another example, only the RLM measurement and receiving of the scheduling information and/or the short message are supported on the first frequency domain resource. After receiving the short message indicating the system message update, the terminal device may switch to another frequency domain resource (the second frequency domain resource) to receive the updated system information. Alternatively, after receiving the scheduling information (for example, paging control indication information), the terminal device may switch to another frequency domain resource (the second frequency domain resource) to receive the downlink service data. For another example, only one or more of five operations: the RRM measurement, the RLM measurement, the beam measurement, receiving the scheduling information, and receiving the short message are supported on the first frequency domain resource.

The following describes the first-type operation that can be supported on the first frequency domain resource.
(1) RRM measurement: The terminal device receives a reference signal that is for the RRM measurement and that is sent by the network device. The reference signal may be a synchronization signal block (Synchronization Signal Block, SSB), a channel state information reference signal (channel state information reference signal, CSI-RS), or a secondary synchronization signal (secondary synchronization signal, SSS). The terminal device performs measurement based on the reference signal, to obtain a measurement result. The measurement result may be a measurement result of a reference signal received power (reference signal received power, RSRP), reference signal received quality (reference signal received quality, RSRQ), or a signal-to-noise and interference ratio (signal-to-noise and interference ratio, SINR) of at least one of the foregoing three reference signals. Alternatively, the RRM measurement data may be another measurement result that is based on the SSB or the CSI-RS, or another measurement result that is based on another reference signal. This is not specifically limited.

The terminal device (for example, a first-type terminal device) supports only the RRM measurement on the first frequency domain resource. In this way, it can be ensured that the power consumption is the smallest when no service data is transmitted, data transmission quality of communication with the current network device can be monitored, and a subsequent behavior may be triggered through RRM when a communication environment changes. Further, the first frequency domain resource may include SSB transmission, and the first-type terminal device may not only receive, on the first frequency domain resource, an SSB sent by this serving base station, but also detect an SSB sent by another non-serving base station. The first-type terminal device performs RRM measurement on the first frequency domain resource, so that quality of service of this serving cell can be monitored, and quality of service of another non-serving cell can be monitored. In this way, when cell handover or cell reselection needs to be performed, the first-type terminal device may respond at any time.

(2) RLM measurement: The RLM measurement is mainly for monitoring downlink channel quality. The terminal receives a reference signal that is for the RRM measurement and that is sent by the network device. The reference signal may be an SSB or a CSI-RS. The terminal device obtains a measurement result based on the reference signal, or obtains a measurement result based on another reference signal, for example, a measurement result of a demodulation reference signal (demodulation reference signal, DMRS) of the physical downlink control channel PDCCH.

(3) Beam measurement: The beam measurement is mainly for monitoring beam quality. The terminal receives a reference signal that is for the RRM measurement and that is sent by the network device. The reference signal may be an SSB, a CSI-RS, or another reference signal (for example, the DMRS for demodulating the PDCCH). The terminal device obtains a measurement result based on the reference signal.

The terminal device (for example, the first-type terminal device) supports only the RLM or beam measurement on the first frequency domain resource. In this way, it can be ensured that the power consumption is the smallest when no service data is transmitted, the data transmission quality of communication with the current network device can be monitored, and a subsequent behavior may be triggered through RLF when the communication environment changes. Different from the RRM measurement, the RLM or beam measurement does not need to monitor data transmission quality of another serving base station.

A process of transmitting (1) to (3) measurement data in includes: The network device sends a reference signal to the terminal device on the first frequency domain resource, and the terminal device generates a measurement result (an RRM measurement result, an RLM measurement result, or a beam measurement result) based on the reference signal, and reports the measurement result to the network device. The terminal device may send the measurement result to the network device on the first frequency domain resource, the terminal device may send the measurement result to the network device on the second frequency domain resource, or the terminal device may send the measurement result to the network device by using the following third frequency domain resource. In this embodiment of this application, a frequency domain resource on which the terminal device performs uplink transmission is not limited.

(4) Short message: The short message includes at least a system message update indication, an earthquake and tsunami warning system (earthquake and tsunami warning system, ETWS) indication, a commercial mobile alert service (commercial mobile alert service, CMAS) indication, and other possible alert indications. Optionally, the system message update includes an SIB 1 update, another on-demand system information (on-demand system information, OSI) update, and another system broadcast message update. This is not specifically limited.

The network device sends the short message to the terminal device on the first frequency domain resource, and the terminal device receives the short message by using the first frequency domain resource.

(5) Scheduling information: The scheduling information mainly notifies UE that the network device has to-be-transmitted data. When the network device has a downlink data transmission service requirement, the scheduling information may indicate the UE to prepare to receive downlink data (or indicate the UE to perform the second-type operation). For example, the scheduling information may be control information scrambled by using a paging radio network temporary identifier (paging radio network temporary identifier, P-RNTI). When the UE is in the RRC idle state, the UE may determine, by receiving the control information scrambled by using the P-RNTI, whether the network device has service data to be transmitted to the terminal device. If the network device has service data to be transmitted to the terminal device, the terminal device may switch to the second frequency domain resource to receive the data. Similarly, when the UE is in the RRC connected state, the UE may also determine, by receiving the control information scrambled by using the P-RNTI, that the network device has service data to be transmitted to the terminal device.

The terminal device (for example, the first-type terminal device) receives only the scheduling information and/or the short message on the first frequency domain resource, to ensure that downlink received data is minimized. Generally, overheads of control bits occupied by indication of the scheduling information/the short message are small. Therefore, the scheduling information/the short message indication may be carried on the PDCCH, and overheads of an occupied control resource are small. The first-type terminal device demodulates the scheduling information and/or the short message, and does not need to consume excessive powers. In addition, it can be further ensured that when a system message of the network device is updated or there is paging information, the first-type terminal device can further receive an updated system message in time, to ensure understanding of a basic system message of the network device and avoid missing the paging information. It may be understood that the first-type operation can ensure basic data communication between the first-type terminal device and the network device, enables the first-type terminal device to track quality of the network device in real time, and receive an updated message in time and maintain system information of a serving base station when a system message is updated or quality changes, and can further reduce the power consumption because the first-type terminal device performs the first-type operation only on the first frequency domain resource.

In addition to the foregoing five operations, the first frequency domain resource may further support some information indicated by paging downlink control information (paging downlink control information, paging DCI) in a future communication system, where the paging DCI is transmitted through the PDCCH.

It should be noted that downlink transmission behavior has large impact on the power consumption of the terminal device. Therefore, the foregoing downlink transmission behavior is restricted on the first frequency domain resource, and other behavior (other types of operations) in addition to the foregoing downlink transmission behavior needs to be switched to another frequency domain resource (for example, the second frequency domain resource) for execution. The first frequency domain resource may alternatively be used as an uplink transmission resource, and the terminal device may send a small amount of uplink data on the first frequency domain resource. For example, the uplink data may be random access preamble data and/or a scheduling request.

In this application, whether the terminal device (for example, a first terminal device) performs the first-type operation on the first frequency domain resource may be configured or enabled by the network device. For example, the network device determines, based on a capability reported by the terminal device or a corresponding use case, whether the first-type terminal device needs to save energy or simplify an operation. If yes, the network device may directly enable the first-type terminal device to perform the first-type operation on the first frequency domain resource (for example, when no service data is transmitted).

Step 204: The terminal device performs the second-type operation on the second frequency domain resource.

The terminal device switches from the first frequency domain resource to the second frequency domain resource, for example, switches from a first BWP to a second BWP. The second frequency domain resource may be preconfigured by the network device for the terminal device. The second-type operation includes transmitting system broadcast information and transmitting specific data of the terminal device.

Optionally, the transmitting specific data of the terminal device may further include data sent by the terminal device to the network device, for example, data sent by the terminal device to the network device through a physical random access channel (physical random access channel, PRACH), data sent by the terminal device to the network device through a physical uplink shared channel (physical uplink shared channel, PUSCH), for example, message 3 (message 3) sent by the terminal device in a random access (random access) process or message A (message A) sent by the terminal device in the random access process, or uplink service data sent in a connected state.

It should be noted that step 204 is an optional step, and may not be performed. To be specific, when the terminal device has no to-be-received downlink data, or the terminal device has no to-be-sent uplink data, the terminal device does not need to switch to the second frequency domain resource, and only needs to camp on the first frequency domain resource.

A condition for triggering the terminal device to switch from the first frequency domain resource to the second frequency domain resource includes the following several cases. In other words, in the following several cases, the terminal device switches from the first frequency domain resource to the second frequency domain resource:

In a first case, the terminal device receives the first information (the short message and the scheduling information) on the first frequency domain resource. If the first information is detected, the first information indicates that there is to-be-received downlink data, and the terminal device switches from the first frequency domain resource to the second frequency domain resource, the terminal device receives, on the second frequency domain resource, data sent by the network device. Optionally, the first information may be carried in DCI for indication. Optionally, the first information may alternatively be indicated by a MAC control element (control element, CE).
(1) The terminal device detects the short message on the first frequency domain resource. When the terminal device detects that system information broadcast by the network device is updated, the terminal device may receive, on the second frequency domain resource, updated broadcast information sent by the network device.

The short message may include the system information update indication, the ETWS indication, the CMAS indication, or another common information indication. The system information update indication is used as an example of the short message. For example, the updated broadcast information, for example, a system information block type 1 (system information block type 1, SIB1) or another SIB, may be read on the second frequency domain resource in a modification period (modification period) of updating the broadcast information.

(2) The terminal device detects the scheduling information on the first frequency domain resource. When the terminal device detects the scheduling information, and the scheduling information indicates that the network device has to-be-sent downlink data, the terminal device switches to the second frequency domain resource, and receives, on the second frequency domain resource, the specific data of the terminal device that is sent by the network device. For example, the terminal device receives, on the second frequency domain resource, specific data of the terminal device that is sent by the network device through the physical downlink shared channel PDSCH. For another example, the terminal device receives specific control data of the terminal device that is sent by the network device through the PDCCH. The terminal device receives downlink service data sent by the network device. In this embodiment of this application, the scheduling information indicates that the network device has to-be-sent downlink data. For example, when the network device needs to page the terminal device, the network device may send the scheduling information, where the scheduling information indicates that the network device has paging information to be transmitted to the terminal device.

In a second case, when the terminal device needs to send uplink data to the network device, the terminal device switches from the first frequency domain resource to the second frequency domain resource.
(1) The terminal device sends the uplink data to the network device on the second frequency domain resource, for example, the data sent by the terminal device to the network device through the physical random access channel, the data sent by the terminal device to the network device through the physical uplink shared channel (PUSCH), for example, message 3 (message 3) sent by the terminal device in the random access (random access) process, or the uplink service data sent by the terminal device in the connected state.
(2) The terminal device may send the uplink data on the first resource, or the terminal device sends the uplink data (where the uplink data may be data that has little impact on the power consumption of the terminal device) on an uplink frequency domain resource (the third frequency domain resource described below) other than the first frequency domain resource. A function of sending the uplink data is that the terminal device may switch to the second frequency domain resource.

For example, the terminal device may send the uplink data on the frequency domain resource (the third frequency domain resource described below) other than the first frequency domain resource. The uplink data may include a scheduling request (scheduling request, SR), a random access preamble sequence, message A in 2-step random access, or other small-packet data. Then, response information of the network device for the uplink data is received on the second frequency domain resource, and the response information may be carried on the PDSCH or the PDCCH.

For another example, the terminal device may send a preamble sequence, a random access message A (MsgA), or a scheduling request SR on the first frequency domain resource, and then switch to the second frequency domain resource to receive a random access response of the network device to the terminal device, for example, receive a random access response message 2 (message 2), message 4 (message 4) Msg4, or message B (message B) sent by the network device. In this case, the first frequency domain resource may carry not only downlink data transmission but also uplink data transmission. The data herein includes control data, service data, a reference signal, and the like. For another example, considering that uplink data transmission of the terminal device does not cause excessively large impact on the power consumption of the terminal device, some uplink data transmission with a small transmission bandwidth and/or a small quantity of uplink transmission bits may be performed on the first frequency domain resource. For example, uplink data whose quantity of bits is not greater than a threshold (for example, the threshold is 56 bits) may be transmitted on the first frequency domain resource. Then, the terminal device switches to the second frequency domain resource, and may receive, on the second frequency domain resource, response information of the network device for the transmitted data. The response information may be carried on the PDSCH or the PDCCH.

In this example, in the foregoing first case, when the network device has to-be-transmitted downlink data, the terminal device switches from the first frequency domain resource to the second frequency domain resource, and receives the downlink data on the second frequency domain resource. In the foregoing second case, when the terminal device has to-be-transmitted uplink data, the terminal device switches from the first frequency domain resource to the second frequency domain resource, and sends the uplink data to the network device on the second frequency domain resource. That is, in the first case and the second case, the terminal device transmits data on the second frequency domain resource only when there is a data transmission service. When there is no data to be transmitted, the terminal device camps on the first frequency domain resource, that is, maintains an RRC connection. In addition, on the first frequency domain resource, the terminal device does not need to always monitor whether there is transmitted downlink data, or does not need to consume power to perform an action such as detecting channel quality to transmit data. Therefore, it can be ensured that the power consumption of the terminal device is reduced as much as possible when the terminal device has no transmission service of the second-type operation. In addition, for Manner (2) in the second case, uplink data that has little impact on the terminal device may be transmitted on the first frequency domain resource or another uplink frequency domain resource, and then the terminal device switches to the second frequency domain resource to perform the second-type operation, so that the power consumption of the terminal device is reduced as much as possible.

It should be noted that, in the first case and the second case, after the terminal device is handed over to the second frequency domain resource, subsequent data transmission may be performed on the second frequency domain resource.

It should be noted that, when the terminal device needs to send uplink data to the network device, the terminal device switches from the first frequency domain resource to the second frequency domain resource. However, a frequency domain resource on which the uplink data is sent is not limited. For example, a small amount of data whose data amount is less than a threshold may be sent on the first frequency domain resource, or may be sent on the second frequency domain resource. A purpose of sending the uplink data by the terminal is to notify the network device that there is currently uplink data to be transmitted, the terminal device needs to switch to the second frequency domain resource to receive response information sent by the network device. The uplink data may include a scheduling request SR, a random access preamble sequence, message A in 2-step random access, or other small-packet data. When the terminal needs to send uplink data to the network device, the terminal device may switch to the second frequency domain resource. For understanding of the "uplink data" below, refer to the descriptions herein. Details are not described below.

In this application, a type of data transmitted on the second frequency domain resource is not limited. Optionally, the first-type operation (for example, RLM measurement) may be further performed on the second frequency domain resource. The following third case and fourth case are used as examples.

Before the third case and the fourth case are described, an RLM detection process is first described.

A conventional process of RLM detection is as follows: The terminal device monitors downlink radio link quality of a serving cell, for example, detects RSRP or RSRQ corresponding to a CSI-RS or an SSB, to indicate, to a higher layer, whether a state of a radio link is out-of-synchronization (out-of-sync) or in-synchronization (in-sync). When the radio link quality detected by the terminal device is lower than a threshold Qout, a physical layer of the terminal device reports, to the higher layer, that the radio link is out-of-synchronization. When the radio link quality detected by the terminal device is higher than a threshold Qin, a physical layer of the terminal device reports, to the higher layer, that the radio link is in-synchronization. If the terminal device detects consecutive (for example, 20) out-of-synchronization (out-of-sync) indications, the terminal device pre-determines an RLF, and then the terminal device further determines whether consecutive (for example, two) in-synchronization (in-sync) indications can be detected. If the consecutive (for example, two) synchronization indications can be detected, the terminal device finally determines that no RLF occurs (that is, it is considered that the radio link is in-synchronization again). If no consecutive in-synchronization indications are detected, the terminal device determines that an RLF occurs (that is, determines that the radio link is finally offline). If the RLF occurs, the terminal device starts radio link recovery or radio link re-establishment. An out-of-sync quantity and an in-sync quantity may be configured by the network device or predefined, for example, stipulated in a standard protocol.

In the third case, the terminal device performs RLM on a radio link between the terminal device and the network device on the first frequency domain resource. When it is per-determined that the radio link failure (radio link failure, RLF) occurs, the terminal device switches to the second frequency domain resource, and the terminal device may continue to perform RLM on the second frequency domain resource.

Specifically, based on the foregoing RLM detection process, after the terminal device detects the M1 out-of-synchronization (out-of-sync) indications on the first frequency domain resource, that is, when the terminal device pre-determines that the RLF occurs, the terminal device may switch to the second frequency domain resource to continue to perform RLM. A moment at which the terminal device switches to the second frequency domain resource is used as a start moment. In a preset time period, whether M2 in-synchronization (in-sync) indications can be detected is determined. If the M2 in-sync indications are detected on the second frequency domain resource, the terminal device finally determines that no RLF occurs on the radio link between the terminal device and the network device. In this case, the terminal device may switch to the first frequency domain resource again, and perform the first-type operation on the first frequency domain resource, that is, return to step 203.

In a conventional method, when determining that the RLF occurs, the terminal device first performs cell reselection, and then implements radio link recovery by using a random access process. It is clear that, in this process, the terminal device further needs to blindly detect an SSB to implement cell reselection. Consequently, the power consumption of the terminal device is increased. Compared with the conventional manner, in an implementation of this application, when detecting that an out-of-sync quantity reaches a specific threshold, the terminal device may switch to the second frequency domain resource to continue monitoring. The threshold is predefined or preconfigured. Because a bandwidth of the second frequency domain resource may be greater than that of the first frequency domain resource, and more reference signals may be configured on the second frequency domain resource than the first frequency domain resource to support the RLM, measurement precision may be further improved. In addition, considering that interference experienced on the first frequency domain resource may be different from that experienced on the second frequency domain resource, the terminal device may further determine, by continuing to implement in-sync detection on the second frequency domain resource, whether the link failure detected on the first frequency domain resource is an accidental event or that the link failure is caused by interference or another reason and is not a true link failure. If in-synchronization is detected on the second frequency domain resource, it indicates that the link failure is not a true link failure. In this way, radio link recovery does not need to be implemented through cell reselection, and power consumption of the terminal device during radio link recovery is reduced.

Optionally, in the third case, when the terminal device detects, on the second frequency domain resource, that no RLF occurs on the radio link, the terminal device may also continue to perform the second-type operation on the second frequency domain resource.

It should be noted that, in the third case, because the network device may not sense an event in which out-of-sync is detected on a terminal device side, if the terminal device finally determines, through detection on the second frequency domain resource, that no RLF occurs, and the terminal device continues to perform the second-type operation on the second frequency domain resource, the terminal device needs to transmit a resource in an uplink (for example, a random access or scheduling request indicates, to the network device, that a frequency domain resource for current data transmission changes). In this way, when data is transmitted, the network device may learn of a frequency domain resource on which scheduling control information should be sent. Then, if there is no to-be-transmitted data on the second frequency domain resource within preset duration, the terminal device may switch to the first frequency domain resource. In addition, the terminal device finally determines, through detection on the second frequency domain resource, that no RLF occurs, or may switch back to the first frequency domain resource. The first-type operation continues to be performed on the first frequency domain resource, to reduce a data transmission procedure, and reduce the power consumption of the terminal device.

In the fourth case, when the terminal device detects the radio link failure on the first frequency domain resource, the terminal device switches from the first frequency domain resource to the second frequency domain resource, and the terminal device reestablishes a radio link on the second frequency domain resource. That is, the terminal device detects M1 consecutive out-of-sync indications on the first frequency domain resource, and does not detect M2 consecutive in-sync indications on the first frequency domain resource, and the terminal device determines that the RLF occurs on the radio link.

When the terminal device determines that the RLF occurs, the terminal device does not start cell reselection, but first performs radio link recovery on the second frequency domain resource. The terminal device may initiate a random access request on the first frequency domain resource or the second frequency domain resource. The terminal device may select 4-step (4-step) random access or 2-step (2-step) random access based on detected channel quality (for example, the channel quality is represented by using an RSRP value or an RSRQ value of the SSB, the CSI-RS, or the another reference signal). When the current channel quality detected by the terminal device is poor, (4-step) random access may be selected, to increase a random access success probability. When the current channel quality detected by the terminal is good, 2-step random access may be selected, to improve random access efficiency. The following is an optional implementation of 4-step random access and 2-step random access in this application:

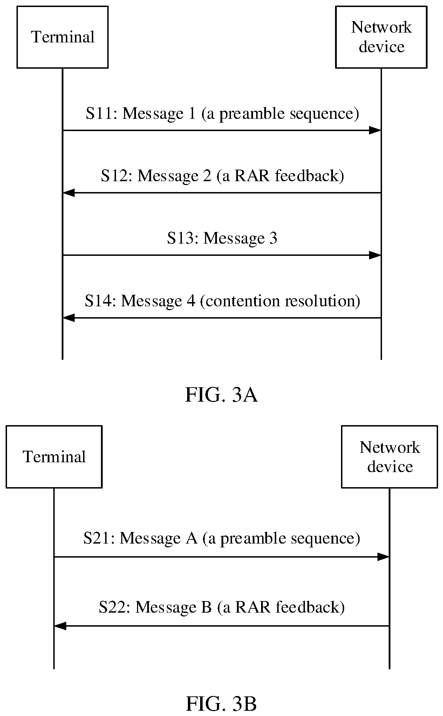

Refer to FIG. 3A. 4-step random access includes the following four steps.

Step S11: A terminal sends message 1 (Msg1) to a network device. To be specific, the terminal sends a random access preamble to the network device on a first frequency domain resource, a second frequency domain resource, or another uplink frequency domain resource (for example, a third frequency domain resource described below), to notify the network device of a random access request. After determining initial transmit power, the terminal initiates random access through a physical random access channel PRACH.

Step S12: The network device feeds back message 2 (Msg2) to the terminal, to be specific, the network device may feed back a random access response (random access response, RAR) to the terminal on the second frequency domain resource, where a response signal is transmitted on a physical downlink shared channel PDSCH. Msg2 indicates a scheduling resource.

Abase station receives preamble information sent by the terminal. If successfully detecting the preamble sent by the terminal, the network device sends the RAR message to the terminal.

Step S13: The terminal device sends message 3 (Msg3) to the network device by using the scheduling resource indicated by Msg2. Msg3 carries a radio link failure indication. Optionally, if a payload size (payload size) of Msg3 is less than or equal to a threshold (for example, the threshold is 56 bits), the terminal device may alternatively send Msg3 on the first frequency domain resource. Uplink data transmission has no obvious impact on power consumption of the terminal device. Therefore, sending Msg3 on the first frequency domain resource can reduce uplink frequency domain resource transmission overheads on another frequency domain resource. Optionally, Msg3 may be sent on a frequency domain resource (for example, the second frequency domain resource, or the third frequency domain resource described below) other than the first frequency domain resource. Usually, a bandwidth of the first frequency domain resource is small. To ensure transmission quality of Msg3, Msg3 may alternatively be transmitted on the another frequency domain resource.

Step S14: The network device sends message 4 (Msg4) to the terminal, where information included in Msg4 varies in different situations. For example, the network device may send Msg4 on the second frequency domain resource, and Msg4 may be a contention resolution success message. After receiving Msg4, the terminal may participate in normal resource scheduling and send data.

In this case, when the terminal device transmits uplink data in a random access procedure or sends a random access response on the second frequency domain resource, the second frequency domain resource may correspond to a frequency domain resource including an uplink RACH resource or a frequency domain resource including a RACH response.

Refer to FIG. 3B. 2-step random access includes the following two steps.

Step S21: A terminal sends message A (MsgA) to a network device. Optionally, message A may be sent on a frequency domain resource (for example, a second frequency domain resource, or a third frequency domain resource described below) other than a first frequency domain resource. Optionally, if a payload size of MsgA is less than or equal to a threshold, the terminal device may alternatively send message A on the first frequency domain resource.

MsgA is equivalent to Msg1 and Msg3 in the 4-step random access in FIG. 3A.

Step S22: The network device returns message B (MsgB) to the terminal. To be specific, the network device may feed back a RAR message to the terminal on the second frequency domain resource, and the terminal device may receive the RAR message on the second frequency domain resource.

The network device sends the RAR message to the terminal. If the terminal receives the RAR message, it indicates that random access succeeds, in other words, data transmission can be performed.

In this case, the second frequency domain resource may correspondingly include a frequency domain resource for 2-step RACH uplink sending and downlink RACH response sending.

In this example, when an RLF occurs, the terminal device does not need to first initiate cell reselection, but may first perform radio link recovery on the second frequency domain resource. In this way, power consumption of the terminal device caused by the cell reselection can be reduced.

It should be noted that the foregoing RLM implementation process is also applicable to beam measurement. Details are not described herein.

Optionally, the terminal device may alternatively send a data resource indication (which may also be referred to as an uplink data transmission indication) to the network device. The data transmission resource indication indicates to switch to the second frequency domain resource for subsequent data transmission with the network device. For example, when the terminal device needs to perform uplink data transmission, the terminal device may directly switch to the second frequency domain resource to send uplink data such as an SR and a RACH, or may send uplink data on the first frequency domain resource. The uplink data carries the data resource indication, and the data resource indication notifies the network device to send downlink data on the second frequency domain resource. For example, the terminal device receives, on the second frequency domain resource, response information sent by the network device, for example, a UL grant for scheduling the uplink data transmission.

It may be understood that the second frequency domain resource may be used for uplink data transmission, or may be used for downlink data transmission. For example, when the network device indicates, by using scheduling information on the first frequency domain resource, that there is to-be-transmitted downlink data, the terminal device switches to the second frequency domain resource to receive the downlink data sent by the network device. In this case, the second frequency domain resource is used for the downlink data transmission. For another example, when the terminal device needs to perform uplink data transmission, the terminal device switches from the first frequency domain resource to the second frequency domain resource, and sends uplink data on the second frequency domain resource. In this case, the second frequency domain resource is used for the uplink data transmission.

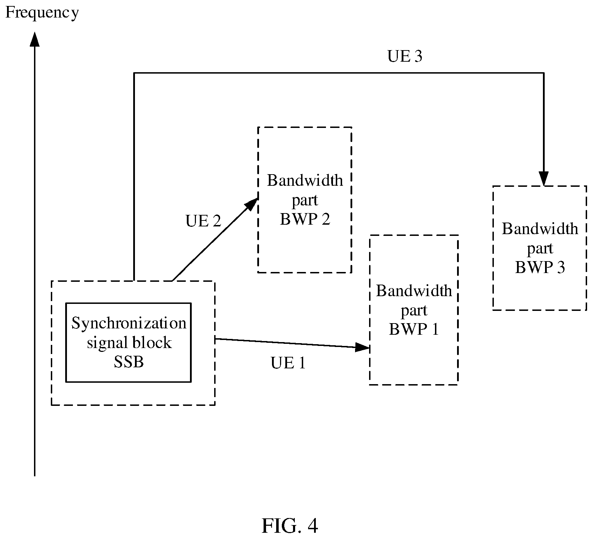

It should be noted that, in the first case to the fourth case, the power consumption of the terminal device can be reduced. In addition, refer to FIG. 4 for understanding. The second frequency domain resource is a frequency domain resource dedicated (or specific) to the terminal device. In other words, the network device may configure different second frequency domain resources for different terminal devices. For example, a second frequency domain resource corresponding to UE 1 is BWP 1, a second frequency domain resource corresponding to UE 2 is BWP 2, and a second frequency domain resource corresponding to UE 3 is BWP 3. Therefore, even if massively connected terminal devices are considered, when data is transmitted, a load balancing effect can be achieved, to prevent data transmission services of most terminal devices from being aggregated on a same frequency domain resource. For example, to implement RRM measurement (on a frequency domain resource corresponding to an SSB), all data transmission services of the terminal device are aggregated on the frequency domain resource including the SSB. Further, to implement RRM measurement, for a reduced capability terminal device (for example, a RedCap terminal device) with a bandwidth capability of 20 MHz, the RedCap terminal devices may be aggregated on the frequency domain resource corresponding to the SSB, for example, within 20 MHz at a same frequency domain location. As a result, data transmission is congested. According to the solutions of this application, frequency domain resources used by different terminal devices can be separated. It should be noted that the dedicated (or specific) frequency domain resource herein does not mean that only UE 1 is allowed to transmit data on BWP 1. Another UE may also be configured on BWP 1, or may be configured on another BWP, to avoid a case in which UEs are all aggregated on a same BWP.

For example, in the first case to the fourth case, a case in which the terminal device switches from the first frequency domain resource to the second frequency domain resource is described. Switching from the second frequency domain resource to the first frequency domain resource includes but is not limited to the following three manners. 1. A direct indication from the network device: To be specific, the network device sends a first indication on the second frequency domain resource, where the first indication indicates the terminal device to switch from the second frequency domain resource to the first frequency domain resource. 2. A manner based on a timer: For example, when the terminal device does not detect data transmission indication information within preset duration, the terminal device may switch from the second frequency domain resource to the first frequency domain resource without an indication from the network device, to reduce indication overheads of the network device. 3. If the terminal device performs radio link recovery on the second frequency domain resource, after the radio link recovery, the terminal device may switch to the first frequency domain resource, and perform basic data transmission with the network device, to simplify a data transmission procedure and reduce the power consumption of the terminal device.

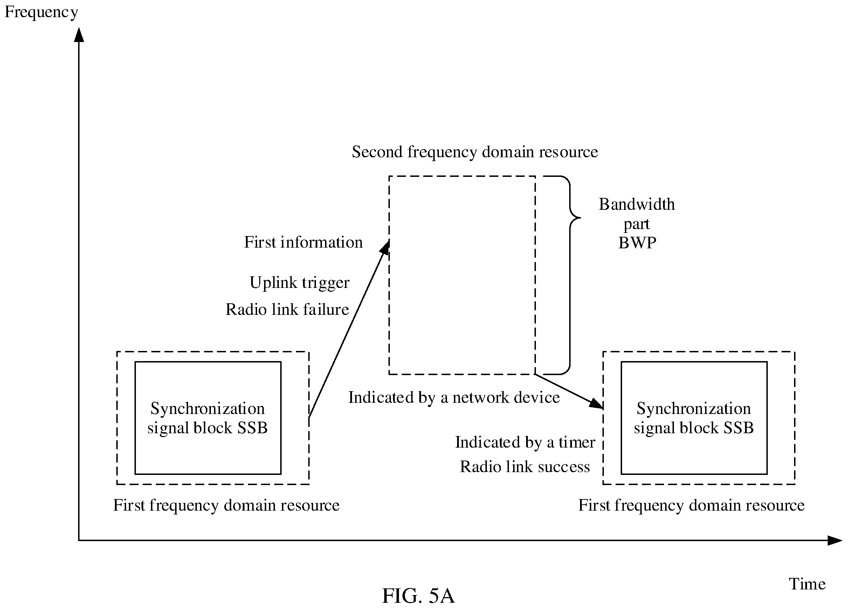

It should be noted that, refer to FIG. 5A for understanding. A terminal device (for example, a first-type terminal device) may switch from a first frequency domain resource to a second frequency domain resource, or may switch from a second frequency domain resource to a first frequency domain resource. Optionally, the first-type terminal device may send indication information. The indication information indicates the foregoing switching process, or indicates that the first-type terminal device performs frequency domain resource switching, or indicates a target frequency domain resource used by the first-type terminal to perform data transmission with a network device after the first-type terminal sends the indication information.

Optionally, an implementation of the first information in the foregoing first-type operation is described. The first information may be carried in DCI, and the first information includes scheduling information and a short message. In this example, the scheduling information is used as an example for description. An implementation of the scheduling information is also applicable to the short message. For a specific implementation of the short message, refer to the following descriptions related to the scheduling information. Details are not described.

The scheduling information includes at least a first status indication and a second status indication. The first status indication indicates that there is no (downlink) data transmission. The second status indication indicates that there is (downlink) data transmission, and data transmission is performed with the network device on the second frequency domain resource. The scheduling information may further include three or more status indications. For example, the scheduling information includes a third status indication, and the third status indication may further indicate a specific second frequency domain resource that is used by the terminal device to perform data transmission with the network device. In this case, the network device configures at least two second frequency domain resources for UE. It should be noted that, in this application, a frequency domain resource that can support terminal device-specific data transmission between the network device and the terminal device, or a frequency domain resource for terminal device-specific data transmission and broadcast information transmission may be referred to as the second frequency domain resource. A reduced capability terminal device is used as an example. Considering costs of the reduced capability terminal device, it should be noted that the terminal device may not support carrier aggregation. Therefore, an indication of the scheduling information may not include an indication on a secondary cell SCell.

The scheduling information includes but is not limited to the following two implementations.

In a first implementation, the scheduling information is carried in DCI, and the terminal device receives the DCI on the first frequency domain resource. The terminal device receives second configuration information from the network device. For example, the terminal device may receive the second configuration information on the first frequency domain resource, or may receive the second configuration information on another frequency domain resource. The second configuration information indicates a first DCI format corresponding to the DCI carrying the scheduling information, and/or indicates a location of the scheduling information in the DCI, where the first DCI format may be predefined. Optionally, the location of the scheduling information in the DCI includes a location of an identifier of the terminal device in an information block in the DCI, and/or a bit location of the scheduling information in the information block.

For example, in an RRC connected state, the network device may configure the first DCI format (for example, DCI format X), where the DCI corresponding to the first DCI format is for carrying the scheduling information, and the DCI corresponding to the first DCI format may be valid for a UE group, that is, the DCI includes a plurality of information blocks. An information block one-to-one corresponds to UE. For example, information block 1 corresponds to UE 1, and information block 2 corresponds to UE 2. For example, there is a correspondence between an index identifier of each information block and an identifier of a terminal device, and each UE may find a corresponding information block in the DCI based on the correspondence.

Example 1: Each information block may include a field for carrying the scheduling information, and the field may include a fixed quantity of bits. For example, a bit length may be configured based on a maximum quantity of supported second frequency domain resources. For example, a maximum of three second frequency domain resources may be configured for each UE. In this case, a fixed length of the field is two bits, to be specific, each UE detects the fixed quantity of bits to detect the indication of the scheduling information. For example, when the length of the field is three bits, three statuses corresponding to two bits may be used to identify to-be-transmitted downlink data and a specific second frequency domain resource to be switched to, and the remaining bit may be used to identify that there is no to-be-transmitted downlink data. For example, the first two bits "00" indicate that there is to-be-transmitted downlink data or a system message update, and the 1^{st} second frequency domain resource is to be switched to. The first two bits "01" indicate that there is to-be-transmitted downlink data, and the 2^{nd} second frequency domain resource is to be switched to. The first two bits "10" indicate that there is to-be-transmitted downlink data, and the 3^{rd} second frequency domain resource is to be switched to. When the third bit indicates "0", it indicates that there is no to-be-transmitted downlink data. Alternatively, two bits may be used to identify a specific second frequency domain resource to be switched to if there is downlink data transmission, and one bit is used to identify the foregoing first status indication and the foregoing second status indication. For example, the first two bits are "00", and the last bit is "0". It indicates that if there is to-be-transmitted downlink data, the 1^{st} second frequency domain resource is to be switched to, but there is currently no to-be-transmitted downlink data. The first two bits are "01", and the last bit is "1". It indicates that there is currently to-be-transmitted downlink data or a system message update, and the 2^{nd} second frequency domain resource is to be switched to for data transmission.

Example 2: Each information block may include a field for carrying the scheduling information. A quantity of bits corresponding to the field for carrying the scheduling information may be configured based on a specific quantity of second frequency domain resources configured by the network device for the terminal device. That is, the network device configures a quantity of bits for detection based on the specific quantity of second frequency domain resources configured for each UE.

For example, the following two implementations may be included.

In a first implementation, if the network device configures N second frequency domain resources, the quantity of bits corresponding to the field carrying the scheduling information is Y. When log₂N (a logarithm of N to base 2) is an integer, Y = log₂N + one bit. log₂N bits indicate a specific second frequency domain resource, and the added bit indicates whether to switch to the second frequency domain resource to perform a second-type operation. If log₂N is not an integer, Y is rounded up based on log₂N. Y-1 bits indicate a specific second frequency domain resource, and a redundancy status (namely, one bit) obtained through rounding up that is based on log₂N may indicate whether to switch to the second frequency domain resource to perform a second-type operation.

For example, if the network device configures three second frequency resources for UE 1, and log₂3 = 1.585, a quantity of bits that are correspondingly detected by UE 1 may be 2. When the two bits are used, three statuses corresponding to the two bits may respectively correspond to the three second frequency domain resources, and the remaining status corresponds to a case in which there is no to-be-transmitted downlink data. For example, "00" indicates the 1^{st} second frequency domain resource, "01" indicates the 2^{nd} second frequency domain resource, "10" indicates the 3^{rd} second frequency domain resource, and " 11" indicates that there is no to-be-transmitted downlink data.

For another example, if the network device configures three second frequency resources for UE 1, and log₂2 = 1, a quantity of bits that are correspondingly detected by UE 1 is Y = log₂2 + 1 = 2. One bit indicates a specific second frequency domain resource, and the remaining bit indicates whether to switch to the second frequency domain resource.

In a second implementation, if the network device configures N second frequency domain resources, indication may be performed in a form of a bitmap (bitmap), where N bits respectively correspond to the N second frequency domain resources. When one of the bits is set to 1, it indicates that the terminal device switches to a second frequency domain resource corresponding to a bit location to perform a second-type operation. When all the bits are set to 0, the terminal device continues to perform a first-type operation on the first frequency domain resource.

For example, when three bits are used, that is, each bit corresponds to one second frequency domain resource, and a value of one of the bits is set to 1, it indicates that there is downlink data transmission or a system message update, and UE may switch to the second frequency domain resource corresponding to the bit location to perform the second-type operation. When all the three bits are set to 0, it indicates that there is no system message update and/or to-be-transmitted downlink data. In other words, in this case, UE performs the first-type operation on the first frequency domain resource. In this example, it is assumed that the network device configures two second frequency domain resources for UE 2. In this case, a length of bits that are correspondingly detected by UE 2 may be two bits. Three statuses corresponding to the two bits may respectively correspond to three second frequency domain resources, and the remaining status corresponds to a case in which there is no to-be-transmitted downlink data.

For example, if the network device configures N UEs to detect same scheduling information, the scheduling information may be shown in the following Table 1. Each field may be separately configured for each terminal device.

**Table 1**

| Block number 1 --- UE 1 | Block number 2 --- UE 2 | Block number 3 --- UE 3 | ... | Block number N --- UE N |
|---|---|---|---|---|
| Bit length: m₁ bits, where m₁ = 1, 2, ... | Bit length: m₂ bits, where m₂ = 1, 2, ... | Bit length: m₃ bits, where m₃ = 1, 2, ... | ... | Bit length: mₙ bits, where mₙ = 1, 2, ... |

Based on the foregoing two examples, the scheduling information may indicate that there is (or there is no) data transmission.

First, the terminal device finds, based on the correspondence between an identifier and an index of an information block, an information block corresponding to the terminal device. For example, the identifier of the terminal device is "1", that is, the terminal device is "UE 1", and UE 1 determines information block 1.

Then, the terminal device detects a fixed-length field or a non-fixed-length field in information block 1. The terminal device determines, based on information indicated in the field, whether there is to-be-transmitted data.

The non-fixed-length field is used as an example for description. If the network device configures one second frequency domain resource for UE 1, a length of the field is one bit. When the bit indicates "0", it indicates that there is currently no to-be-received data. When the bit indicates "1", it may indicate that there is currently data transmission, and there is one second frequency domain resource for data transmission. For another example, if the network device configures two second frequency domain resources for UE 1, a length of the field is two bits. When the field indicates "00", it indicates that there is currently no to-be-received data. When the field indicates "10" or "10", it indicates that there is to-be-transmitted data. In addition, if the network device configures two second frequency domain resources for the terminal device, the indicated content "10" or "01" may be used to determine a specific second frequency domain resource to be switched to.

When the network device configures at least two second frequency domain resources for the terminal device, the terminal device may determine, according to a preset (or default) rule, a second frequency domain resource corresponding to subsequent data transmission.

For example, the terminal device may use, as the second frequency domain resource of the to-be-transmitted data, a second frequency domain resource that is last used prior to a current moment. For example, in a first time unit, UE performs data transmission with the network device on a frequency domain resource (which is denoted as "frequency domain resource a"). In a second time unit, the UE switches to the first frequency domain resource. The first time unit is earlier than the second time unit. In this case, at a current moment, the UE directly selects "frequency domain resource a" used prior to the first time unit as the second frequency domain resource, to receive data to be sent by the network device.

For another example, the network device preconfigures the second frequency domain resource, to be specific, it is limited by the network device through configuration that a frequency domain resource corresponding to the terminal device is the second frequency domain resource when the second-type operation occurs.

For another example, each of a plurality of second frequency domain resources has an index, and the UE may use, by default, a frequency domain resource corresponding to a target index as the second frequency domain resource. For example, the target index is index 0 or index 1. Alternatively, the UE may determine, as the second frequency domain resource, a frequency domain resource corresponding to a smallest index (or a largest index).

For still another example, the UE determines the second frequency domain resource, and a frequency range between a start point and an end point of the second frequency domain resource includes a frequency domain range of the first frequency domain resource. In this way, it can be ensured that when the UE switches from the first frequency domain resource to the second frequency domain resource, an operating center frequency remains unchanged, and the UE does not need to perform radio frequency (radio frequency, RF) adjustment, to avoid data service interruption caused by the RF adjustment and ensure data transmission performance. Further, optionally, on this basis, a bandwidth of the second frequency domain resource is less than or equal to an operating bandwidth (for example, 20 MHz) of the UE, so that power consumption of the UE can be reduced.

Optionally, the terminal device may determine, based on an indication of a second field, a specific second frequency domain resource on which the second-type operation (or data transmission) is performed.

In this example, the DCI carries the scheduling information, so that signaling overheads of the network device can be reduced. In addition, a small quantity of bits indicate frequency domain resource switching (or conversion), to reduce indication overheads of DCI control information, and further help improve downlink control information receiving performance. For example, NR RedCap UE has a weaker bandwidth capability and a smaller quantity of receive antennas than NR legacy UE. As a result, receiving performance of the NR RedCap UE deteriorates with same DCI control information overheads. In this example, frequency resource switching is implemented by using a small quantity of bits, so that DCI transmission performance can be ensured, thereby ensuring data transmission performance.

In a second implementation, the scheduling information is carried in downlink control information DCI scrambled by using a power saving radio network temporary identifier (power saving radio network temporary identifier, PS-RNTI). In addition, the scheduling information may alternatively be carried in a wake-up signal (wake-up signal, WUS). The WUS may be a sequence, and the scheduling information is implemented by using the wake-up signal (wake-up signal, WUS). In an RRC connected state (connected state), the network device may configure a wake-up function implemented by the terminal device by using downlink control information DCI format 2-6. The terminal device determines, based on the WUS, whether to perform a second-type operation on the second frequency domain resource. As shown in the following Table 2, the WUS implemented by using DCI format 2-6 is valid for a UE group.

**Table 2**

| Block number 1 --- UE 1 | Block number 2 --- UE 2 | Block number 3 --- UE 3 | ... | Block number N --- UE N |
|---|---|---|---|---|
| Wake up or not (wake up or not) | Wake up or not (wake up or not) | Wake up or not (wake up or not) | ... | Wake up or not (wake up or not) |

As shown in Table 2, the WUS includes indication information for a plurality of UEs, and a block number corresponding to each UE includes a wake-up indication and a secondary cell dormancy indication (secondary cell dormancy indication). The wake-up indication occupies one bit, and the secondary cell dormancy indication may be configured to occupy zero to five bits. From a perspective of cost reduction, a RedCap terminal device may not support carrier aggregation. In this case, the secondary cell dormancy indication may occupy zero bits. The scheduling information in this application may be implemented by using the one-bit wake-up indication in the WUS. Refer to the following Table 3.

**Table 3**

| Wake-up indication | UE behavior |
|---|---|
| 0 | The UE performs the first-type operation on the first frequency domain resource |
| 1 | There is to-be-transmitted data, and the UE performs data transmission with the network device on the second frequency domain resource (that is, performs the second-type operation) |

As shown in Table 3, when the wake-up indication bit is "0", it indicates that there is currently no to-be-transmitted downlink data, and the terminal device does not need to receive downlink data sent by the network device, and only needs to continue to camp on the first frequency domain resource. When the terminal device detects that the wake-up indication bit is "1", it indicates that there is currently to-be-transmitted downlink data. The scheduling information indicates that the terminal device is ready to receive the downlink data sent by the network device. It is determined that the UE needs to switch from the first frequency domain resource to the second frequency domain resource, and receive, on the second frequency domain resource, the downlink data sent by the network device. When the network device configures one second frequency domain resource for the terminal, the terminal device switches to the second frequency domain resource when the wake-up indication bit is "1". Alternatively, when the network device configures a plurality of second frequency domain resources (for example, a plurality of BWPs), the network device may not indicate a specific BWP as the second frequency domain resource. In this case, the terminal device may determine the second frequency domain resource in the following several manners. For example, the terminal device may randomly select one of the plurality of BWPs as the second frequency domain resource. For another example, the terminal device considers a BWP as the second frequency domain resource by default in a preset manner. For example, the terminal device may use a BWP with a smallest index as the second frequency domain resource.

It should be noted that, in this example, an extra bit may be added to indicate a specific second frequency domain resource on which data transmission is performed. For example, a specific second frequency domain resource is indicated by using a fixed quantity of bits (for example, two bits). For details, refer to related descriptions in the foregoing first implementation. Details are not described herein again.

In this example, the scheduling information may be carried in the DCI scrambled by using the PS-RNTI. To be specific, whether there is to-be-transmitted data may be indicated by using the DCI scrambled by using the PS-RNTI, so that a frequency resource corresponding to data transmission is not indicated by adding an extra bit. This reduces control information indication overheads, and helps improve downlink control information receiving performance. For example, NR RedCap UE has a lower operating bandwidth and a smaller quantity of receive antennas. As a result, receiving performance of the NR RedCap UE deteriorates with same DCI control information overheads. However, in this example, the terminal device may switch a frequency resource by using a small quantity of bits, to ensure data transmission performance.

Optionally, in Table 3, when the wake-up indication is "1", a wake-up timer (drx-on duration timer) is started on the second frequency domain resource for a next discontinuous reception (discontinuous reception, DRX) cycle (cycle). That is, in the next DRX cycle, the UE monitors a downlink PDCCH. In this time period, the UE is in wake-up mode. In this example, a discontinuous reception method is used, so that the UE periodically enters sleep mode (sleep mode) at a specific moment and does not monitor a PDCCH. When the wake-up indication is " 1", that is, when there is to-be-transmitted data, the terminal monitors a PDCCH subframe. This reduces power consumption of the UE.

It should be noted that the foregoing describes the implementation of the first information. The first information may be carried in information scrambled by using the P-RNTI, information scrambled by using the PS-RNTI, information scrambled by using a system information radio network temporary identifier (system information radio network temporary identifier, SI-RNTI), or the WUS. When receiving the first information on the first frequency domain resource, the terminal device switches from the first frequency domain resource to the second frequency domain resource. However, when the terminal device receives, on the second frequency domain resource, normal (or legacy) information scrambled by using a P-RNTI, normal (or legacy) information scrambled by using a PS-RNTI, normal (or legacy) information scrambled by using an SI-RNTI, or a normal (or legacy) WUS, the terminal device may directly perform normal data transmission without performing frequency domain resource switching (for example, without switching from the second frequency domain resource to another frequency domain resource).

Optionally, a bandwidth size of the first frequency domain resource is described.

With reference to the first-type operation supported on the first frequency domain resource, a measurement operation, such as RRM measurement, RLM measurement, and beam measurement, is implemented.

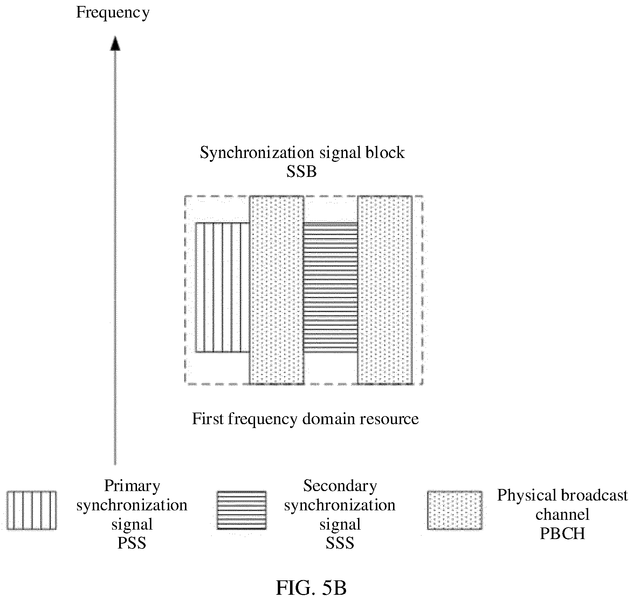

In a first example, refer to FIG. 5B for understanding. The first frequency domain resource includes at least an SSB bandwidth resource, to be specific, a bandwidth resource between a start point and an end point of the first frequency domain resource covers the SSB bandwidth resource. The bandwidth size of the first frequency domain resource may not be greater than an SSB bandwidth size. Optionally, the bandwidth size of the first frequency domain resource may be equal to the SSB bandwidth size. The SSB includes information about a primary synchronization signal PSS, a secondary synchronization signal SSS, and a physical broadcast channel (physical broadcast channel, PBCH). The PBCH needs 20 RBs. Therefore, the bandwidth size of the first frequency domain resource may not be greater than 20 RBs, and the bandwidth size of the first frequency domain resource may be 20 RBs from a perspective that reducing a bandwidth can reduce power consumption of the UE. In this way, it can be ensured that the terminal device performs RRM and/or RLM measurement and/or beam measurement by using the SSB, and that a bandwidth for measurement is as small as possible. This reduces the power consumption of the terminal device.

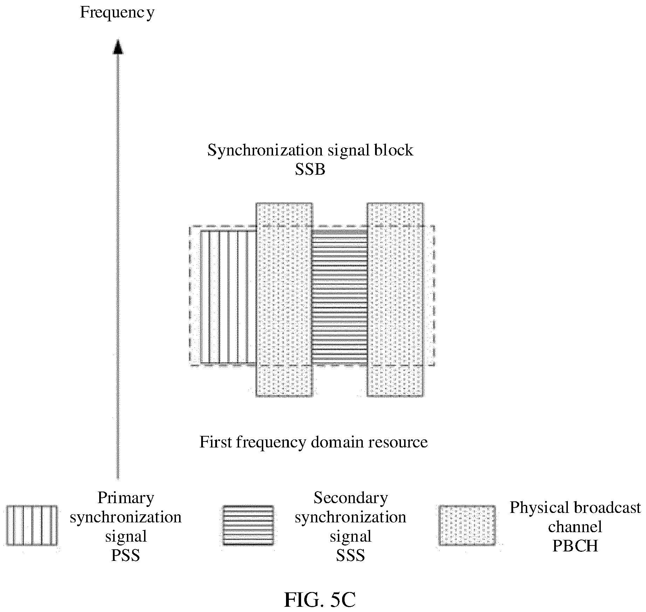

In a second example, refer to FIG. 5C for understanding. The terminal device may implement a measurement operation (for example, RRM, RLM, or beam measurement) by using a synchronization signal (synchronization signal, SS), and the bandwidth of the first frequency domain resource may not be greater than a bandwidth of the synchronization signal. Optionally, the bandwidth of the first frequency domain resource may be equal to the bandwidth of the synchronization signal. In a conventional technology, a bandwidth of a synchronization signal is 12 RBs, so that the bandwidth of the first frequency domain resource may be 12 RBs. In this way, because the bandwidth of the first frequency domain resource is reduced, power consumption of the terminal device in an RRC connected state or a non-connected state (for example, an RRC idle state or inactive state) can be further reduced when there is no data transmission service.

Further, if a subcarrier spacing (subcarrier spacing, SCS) corresponding to the first frequency domain resource is 30 KHz, 20 RBs and 12 RBs correspond to 7.2 MHz and 4.32 MHz respectively. In consideration of bandwidth implementation complexity on the terminal device side, the bandwidth of the first frequency domain resource may be directly set to 10 MHz or 5 MHz. In addition, considering that a terminal device with a narrower bandwidth capability may be introduced in a future communication system, a synchronization signal or an SSB with a narrower bandwidth may be introduced in the future communication system (for example, NR R18 or a beyond system). In this case, the bandwidth of the first frequency domain resource may correspond to a bandwidth corresponding to the SSB or the synchronization signal with the smaller bandwidth. In this example, the bandwidth of the first frequency domain resource can ensure SSB-based RRM, RLM, or beam management measurement, and reduce the power consumption of the terminal device. In particular, for a terminal device with a small bandwidth capability, power consumption is greatly reduced. For example, an NR RedCap terminal device is used as an example. For example, a bandwidth capability of the NR RedCap terminal device is 20 MHz. When the first frequency domain resource is 20 RBs, and there is no data transmission (to be specific, when there is no data transmission, and the terminal device operates on the first frequency domain resource), power consumption of the RedCap terminal device operating on the first frequency domain resource is reduced by 24% compared with that of the RedCap terminal device operating within a 20 MHz frequency resource range. Abandwidth capability of legacy UE in an NR R15/R16 version is 100 MHz. Usually, the NR legacy UE may use 20 MHz including a control resource set 0 (control resource set 0, CORESET0) as a data transmission frequency resource between the NR legacy UE and the network device when data transmission is not frequent. In this case, if a first frequency domain resource of the NR legacy UE is further reduced to 20 RBs, power consumption is also reduced by 10% compared with a reduction from 100 MHz to 20 MHz. Therefore, in this application, setting the bandwidth of the first frequency domain resource to 20 RBs (or 12 RBs) can effectively reduce the power consumption of the terminal device, especially for the terminal device with the small bandwidth capability. It should be noted that the bandwidth of the first frequency domain resource may alternatively be set to any value between 12 RBs and 20 RBs. This is not specifically limited.

It should be noted that in this embodiment of this application, the bandwidth of the first frequency domain resource may alternatively be a channel bandwidth of a future narrowband terminal device. For example, the channel bandwidth of the future narrowband terminal device is only one RB or another value less than 12 RBs, and the bandwidth of the first frequency domain resource may alternatively be only one RB or another value less than 12 RBs. Alternatively, the bandwidth of the first frequency domain resource may be a reference signal bandwidth used when the future narrowband terminal device performs RRM and/or RLM measurement. For example, the future terminal device performs RRM measurement by using a PSS and/or an SSS. A bandwidth of the PSS or the SSS is less than 12 RBs, for example, 6 RBs or less. In this case, the bandwidth of the first frequency domain resource may alternatively be configured to be equal to the reference signal bandwidth. In this way, the power consumption of the terminal device can be reduced when there is no data transmission service.

It should be noted that, in this embodiment of this application, the bandwidth of the first frequency domain resource may alternatively be a bandwidth of the first-type terminal device, for example, 20 MHz, 10 MHz, or 5 MHz. Alternatively, the bandwidth of the first frequency domain resource is a downlink initial BWP corresponding to the first-type terminal device. Alternatively, the bandwidth of the first frequency domain resource is a downlink initial BWP corresponding to a second-type terminal device. The downlink initial BWP corresponding to the second-type terminal device may be a frequency resource including a CORESET #0 corresponding to the second-type terminal device. It should be noted that if the downlink initial BWP corresponding to the second-type terminal device does not exceed a bandwidth capability of the first-type terminal device, the downlink initial BWP corresponding to the second-type terminal device may be the downlink initial BWP corresponding to the first-type terminal device.

Optionally, in a possible implementation, the communication method may further include the following steps.

First, the terminal device determines a third frequency domain resource.

The third frequency domain resource is indicated by the network device by using indication information. The indication information may indicate the third frequency domain resource. The terminal device receives the indication information sent by the network device, and the terminal device may directly determine the third frequency domain resource based on the indication information. Alternatively, the terminal device receives indication information, where the indication information may indicate two frequency domain resources, a first field in the indication information indicates a first frequency domain resource, and a second field in the indication information indicates a second frequency domain resource. Optionally, the terminal device receives two pieces of indication information, where first indication information is for determining the first frequency domain resource, and second indication information is for determining the third frequency domain resource.

Optionally, the network device configures a plurality of frequency domain resources, and the terminal device selects the third frequency domain resource from the plurality of frequency domain resources. The terminal device may determine the third frequency domain resource in the following several manners. For example, the terminal device may randomly select one of a plurality of BWPs as the third frequency domain resource. For another example, the terminal device considers a BWP as the first frequency domain resource by default in a preset manner. For example, when the first frequency domain resource is different from the third frequency domain resource, the terminal device may use a BWP with a smallest index or a BWP with a smallest bandwidth in another frequency domain resource other than the first frequency domain resource as the third frequency domain resource. A bandwidth is also a factor that affects power consumption of the terminal device. The terminal selects a BWP with a small bandwidth as the third frequency domain resource, so that an operating bandwidth of the terminal device is the smallest in the plurality of BWPs. This effectively reduces the power consumption of the terminal device.

The third frequency domain resource may be used as an uplink transmission resource. It may be understood that, if a cell is a time division duplex (time division duplex, TDD) cell, the third frequency domain resource and the first frequency domain resource have a same center frequency and bandwidth. It may alternatively be understood that the third frequency domain resource is the first frequency domain resource, and uplink and downlink are only logically distinguished. If a cell is a frequency division duplex (frequency division duplex, FDD) cell, the third frequency domain resource and the first frequency domain resource are different frequency domain resources, and center frequencies of the third frequency domain resource and the first frequency domain resource are different (but frequencies are usually close). The first frequency domain resource is a downlink frequency domain resource, and the third frequency domain resource is an uplink frequency domain resource.

Then, the terminal device sends second information to the network device on the third frequency domain resource. The second information indicates the terminal device to perform the second-type operation on a target frequency domain resource.

A small amount of uplink data may be sent on the third frequency domain resource. For example, the third information may be random access preamble data and/or a scheduling request.

For example, in the example corresponding to FIG. 3A, in step S11 in the 4-step access method, the terminal sends message 1 (Msg1) to the network device, and the terminal may send a random access preamble (or preamble data) to the network device on the first frequency domain resource or the third frequency domain resource.

The target frequency domain resource may be the second frequency domain resource, or the target frequency domain resource may be a fourth frequency domain resource. The fourth frequency domain resource may be a frequency domain resource preconfigured by the network device. The fourth frequency domain resource may be the second frequency domain resource, or the fourth frequency domain resource is a frequency domain resource different from the second frequency domain resource. This is not specifically limited.

Finally, the terminal device may receive a response on the target frequency domain resource, or receive scheduling information on the target frequency domain resource.

It may be understood that in this application, when the first frequency domain resource is used as the downlink transmission resource, behavior of the terminal device on the first frequency domain resource is restricted (that is, the terminal device performs the first-type operation). However, when the terminal device has a small amount of uplink data, the first frequency domain resource may also be used as the uplink transmission resource. When the terminal device has the small amount of uplink data (for example, preamble data and/or a scheduling request), the terminal device may send the uplink data on the first frequency domain resource, or may send the uplink data on the third frequency domain resource, or may send the uplink data on the second frequency domain resource. In this application, the third frequency domain resource may alternatively be the second frequency domain resource, for example, in a TDD system.

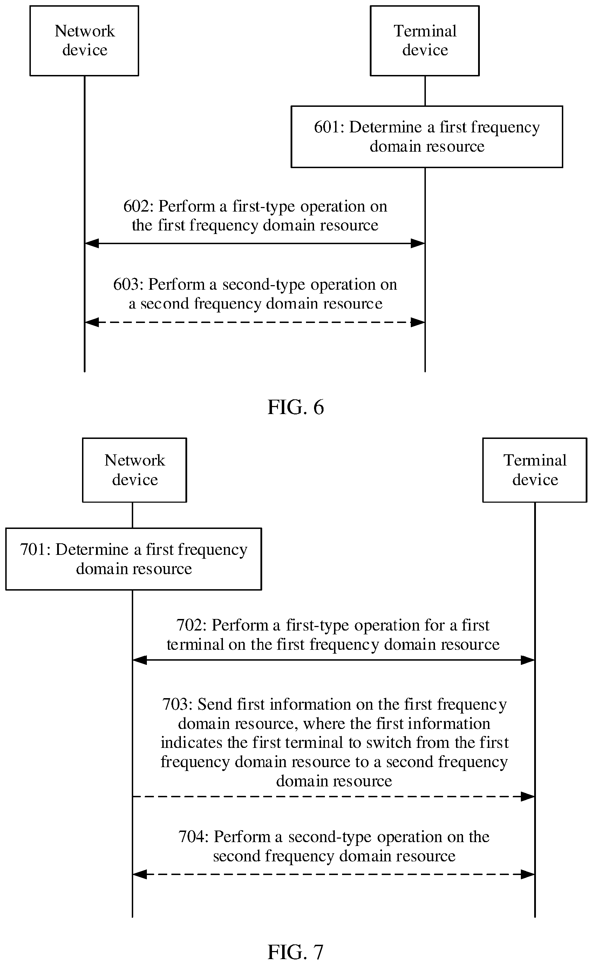

FIG. 6 shows another embodiment of a communication method according to embodiments of this application. A main difference between this embodiment and the embodiment corresponding to FIG. 2 lies in that a method for determining a first frequency domain resource by a terminal is different. In the embodiment corresponding to FIG. 2, a network device sends indication information to the terminal device, and the first frequency domain resource is explicitly indicated by the indication information. The terminal device may directly determine the first frequency domain resource based on the indication information. However, in this embodiment, the first frequency domain resource is not indicated by the network device, but is determined by the terminal device based on an implicit definition. In this embodiment, the first frequency domain resource is implicitly indicated, and the network device does not need to indicate the first frequency domain resource, so that signaling overheads for indicating the first frequency domain resource by the network device can be reduced.

Step 601: The terminal device determines the first frequency domain resource.

Refer to FIG. 5B again. The terminal device determines a frequency domain resource corresponding to an SSB sent by the network device. Then, the frequency domain resource corresponding to the SSB is used as the first frequency domain resource. Alternatively, refer to FIG. 5C again. The terminal device determines a frequency domain resource corresponding to a PSS and/or an SSS sent by the network device. Then, the frequency domain resource corresponding to the PSS and/or the SSS is used as the first frequency domain resource.

For example, when UE device is powered on, cell search is performed, and an SSB needs to be detected. The terminal device obtains an approximate range of the SSB based on a synchronization raster, and then performs blind search to determine a frequency domain location of the SSB. The synchronization raster defines all frequencies, and a frequency location of the SSB corresponds to a global synchronization channel number (global synchronization channel number, GSCN). Then, the UE determines the frequency domain location of the SSB based on a correspondence between a frequency and a GSCN.

The SSB includes three types of information: a primary synchronization signal PSS, a secondary synchronization signal SSS, and a physical broadcast channel PBCH. Different SSBs in a periodicity may be allocated to different beams for sending. Each SSB has a different sending time point, and is sequentially sent. This may also be referred to as SSB beam scanning. A set of SSBs participating in the beam scanning is a synchronization signal burst set (SS burst set). After finding the PSS and the SSS, a mobile phone may determine frequency locations of the PSS and the SSS.

The network device and the terminal device agree in advance that a frequency domain resource corresponding to the SSB, or a frequency domain resource corresponding to the PSS or the SSS is used as the first frequency domain resource. Therefore, when the terminal device determines a location of the first frequency domain resource, the network device may also determine the first frequency domain resource.

Optionally, the terminal device receives configuration information sent by the network device, where the configuration information (which is also referred to as first configuration information) includes information about a frequency domain resource of a downlink reference signal. For example, the downlink reference signal may be a channel state information reference signal CSI-RS, a demodulation reference signal DMRS, or another reference signal. This is not specifically limited. The terminal device uses the frequency domain resource of the downlink reference signal as the first frequency domain resource.

Step 602: The terminal device performs a first-type operation on the first frequency domain resource.

Refer to related descriptions in step 203 in the embodiment corresponding to FIG. 2. Details are not described herein again.

Step 603: The terminal device performs a second-type operation on a second frequency domain resource.

Refer to related descriptions in step 204 in the embodiment corresponding to FIG. 2. Details are not described herein again.

Step 603 is an optional step, and may not be performed. To be specific, when the terminal device has no to-be-received downlink data, or the terminal device has no to-be-sent uplink data, the terminal device does not need to switch to the second frequency domain resource, and only needs to camp on the first frequency domain resource.

The terminal device first determines the first frequency domain resource, and behavior of the terminal device on the first frequency domain resource is restricted. The terminal device performs only the first-type operation on the first frequency domain resource, where the first-type operation may be a necessary (or basic) operation that needs to be performed by the terminal device to maintain a connection to the network device during downlink data transmission. The behavior of the terminal device on the first frequency domain resource is restricted, so that a radio resource control RRC connection can be maintained, and a data transmission process can be simplified. In this way, power consumption of the terminal device is reduced from the perspective of communication. In addition, in this embodiment, the first frequency domain resource determined by the terminal device is not indicated by the network device, but is implicitly determined by the terminal device. In this embodiment, the first frequency domain resource is determined by the terminal device in an implicit determining manner, and the network device does not need to indicate the first frequency domain resource, so that the signaling overheads for indicating the first frequency domain resource by the network device can be reduced.

FIG. 7 shows another embodiment of a communication method according to embodiments of this application. This embodiment is described based on a network device side.

Step 701: A network device determines a first frequency domain resource.

The network device may configure a plurality of terminals to share the first frequency domain resource. That is, the plurality of terminals may transmit data on the first frequency domain resource. The plurality of terminals include a first terminal. In this example, the first terminal is used as an example. The network device configures the first frequency domain resource for the first terminal, so that the first terminal performs a first-type operation on the first frequency domain resource.

It should be noted that the first terminal in this example is the terminal device in the example corresponding to FIG. 2, or may be the terminal device in the example corresponding to FIG. 7.

In an implementation, the network device configures the first frequency domain resource for the first terminal, sends indication information to the first terminal, and notifies the first terminal of a location of the first frequency domain resource by using the indication information. For details, refer to the related descriptions in step 201 and step 202 in the embodiment corresponding to FIG. 2.

In another implementation, the network device and the terminal device agree on using a frequency domain resource corresponding to an SSB or using a frequency domain resource corresponding to a PSS or an SSS as the first frequency domain resource, and the network device and the terminal device implicitly determine the first frequency domain resource. For details, refer to step 601 in the embodiment corresponding to FIG. 6.

Step 702: The network device performs the first-type operation for the first terminal on the first frequency domain resource.

For example, a reference signal for performing RRM measurement is sent to the first terminal on the first frequency domain resource, and the first terminal receives the reference signal for performing RRM measurement, so that the first terminal performs RRM measurement on the first frequency domain resource. The network device sends, to the first terminal on the first frequency domain resource, a reference signal for radio link measurement, and the first terminal receives the reference signal for radio link measurement, so that the first terminal performs radio link measurement on the first frequency domain resource. Alternatively, the network device sends first information on the first frequency domain resource, and the first terminal receives the first information on the first frequency domain resource, where the first information indicates the first terminal device to perform a second-type operation on a second frequency domain resource, so that the terminal device can switch from the first frequency domain resource to the second frequency domain resource based on the first information.

For this step, refer to the related descriptions in step 203 in the embodiment corresponding to FIG. 2. Details are not described herein again.

Optionally, step 703: The network device sends the first information on the first frequency domain resource, where the first information indicates the first terminal to switch from the first frequency domain resource to the second frequency domain resource.

The network device sends the first information on the first frequency domain resource, and the terminal device receives the first information (a short message and scheduling information) on the first frequency domain resource. If the first information is detected, the first information indicates that there is to-be-received downlink data, and the terminal device switches from the first frequency domain resource to the second frequency domain resource, the terminal device receives, on the second frequency domain resource, data sent by the network device.

Optionally, step 704: The network device performs the second-type operation on the second frequency domain resource.

The network device broadcasts a system message, an ETWS indication, a CMAS indication, or another common information indication on the second frequency domain resource.

The network device sends specific data of the terminal device on the second frequency domain resource. For example, the network device sends control data to the first terminal, where the control data is control information for scheduling unicast service data and/or multicast service data of the terminal device, and the control information is different from information in the first-type operation. Alternatively, the network device sends service data to the first terminal; or the network device sends a random access response or the like to the first terminal.

When the network device has to-be-transmitted downlink data, the terminal device switches from the first frequency domain resource to the second frequency domain resource, and receives the downlink data on the second frequency domain resource. The terminal device switches to the second frequency domain resource to transmit data only when the network device has a data transmission service. When there is no data to be transmitted, the terminal device camps on the first frequency domain resource, that is, maintains an RRC connection between the network device and the terminal device. In addition, on the first frequency domain resource, the terminal device does not need to always monitor whether there is transmitted downlink data, or does not need to consume power to perform an action such as detecting channel quality to transmit data. Therefore, it may be ensured that power consumption of the terminal device is reduced as much as possible when the terminal device has no transmission service of the second-type operation.

Corresponding to the methods provided in the foregoing method embodiments, embodiments of this application further provide corresponding apparatuses, including corresponding modules configured to perform the foregoing embodiments. The module may be software, hardware, or a combination of the software and the hardware.

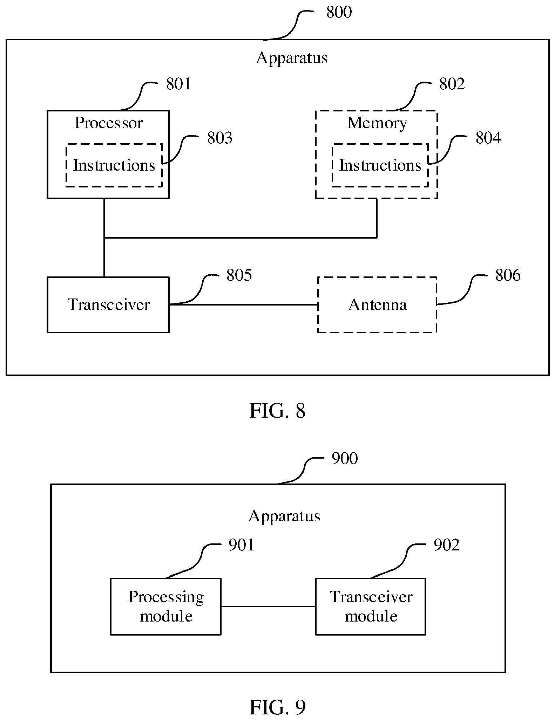

FIG. 8 is a schematic diagram of a structure of an apparatus. The apparatus 800 may be a network device, may be a terminal device, may be a chip, a chip system, a processor, or the like that supports the network device in implementing the foregoing methods, or may be a chip, a chip system, a processor, or the like that supports the terminal device in implementing the foregoing methods. The apparatus may be configured to implement the methods described in the foregoing method embodiments. For details, refer to the descriptions in the foregoing method embodiments.

The apparatus 800 may include one or more processors 801 that may implement a control function. The processor 801 may be a general-purpose processor, a dedicated processor, or the like. For example, the processor 801 may be a baseband processor or a central processing unit. The baseband processor may be configured to process a communication protocol and communication data. The central processing unit may be configured to control the communication apparatus (for example, a base station, a baseband chip, a terminal, a terminal chip, a DU, or a CU), execute a software program, and process data of the software program.

In an optional design, the processor 801 may alternatively store instructions 803, and the instructions 803 may be run by the processor, to enable the apparatus 800 to perform the methods described in the foregoing method embodiments.

In another optional design, the processor 801 may include a transceiver unit configured to implement receiving and sending functions. For example, the transceiver unit may be a transceiver circuit, an interface, or an interface circuit. The transceiver circuit, the interface, or the interface circuit configured to implement receiving and sending functions may be separated, or may be integrated together. The transceiver circuit, the interface, or the interface circuit may be configured to read and write code/data, or the transceiver circuit, the interface, or the interface circuit may be configured to transmit or transfer a signal.

In still another possible design, the apparatus 800 may include a circuit, and the circuit may implement the sending, receiving, or communication function in the foregoing method embodiments.

Optionally, the apparatus 800 may include one or more memories 802. The memory may store instructions 804. The instructions may be run on the processor, so that the apparatus 800 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 800 may further include a transceiver 805 and/or an antenna 806. The processor 801 may be referred to as a processing unit, and control the apparatus 800. The transceiver 805 may be referred to as a transceiver unit, a transceiver circuit, a transceiver apparatus, a transceiver module, or the like, and is configured to implement a transceiver function.

The apparatus has a function of implementing the terminal device described in embodiments of this application. For example, the apparatus includes a corresponding module, unit, or means (means) used by the terminal to perform the steps related to the terminal and described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments.

Optionally, the modules in the apparatus 800 in this embodiment of this application may be configured to perform the methods performed by the terminal device in FIG. 2 and FIG. 6 in embodiments of this application.

Refer to FIG. 9. An apparatus 900 includes a processing module 901 and a transceiver module 902.

The processing module 901 determines a first frequency domain resource based on indication information.

The transceiver module 902 is configured to perform a first-type operation on the first frequency domain resource determined by the processing module 901, where the first-type operation includes at least one of receiving a reference signal for radio resource management RRM measurement, receiving a reference signal for radio link measurement, and receiving first information, the first information indicates the terminal device to perform a second-type operation on a second frequency domain resource, and the second-type operation is different from the first-type operation.

Further, the processing module 901 is configured to perform step 202 in the embodiment corresponding to FIG. 2 and step 601 in the embodiment corresponding to FIG. 6. The transceiver module 902 is configured to perform step 203 and step 204 in the embodiment corresponding to FIG. 2, and step 702 and step 703 in the embodiment corresponding to FIG. 6.

In a possible design, functions of the processing module 901 and the transceiver module 902 may be performed by the processor 801 in FIG. 8. In a possible design, a function of the processing module 901 may be performed by the processor 801 in FIG. 8, and a function of the transceiver module 902 may be performed by the transceiver 805 in FIG. 8.

Specifically, the transceiver module 902 is further configured to receive the first information on the first frequency domain resource; and switch from the first frequency domain resource to the second frequency domain resource based on the first information.

Optionally, the first information includes a short message and scheduling information, where the short message indicates a system message update and/or an alert indication, and the scheduling information indicates whether there is to-be-received downlink data.

Optionally, the scheduling information is carried in downlink control information DCI scrambled by using a power saving radio network temporary identifier PS-RNTI.

Optionally, the second-type operation includes: receiving control data from a network device; receiving system information from the network device; receiving service data from the network device; or receiving a random access response from the network device.

Optionally, a bandwidth of the first frequency domain resource is a bandwidth of a synchronization signal block SSB sent by the network device or a bandwidth of a primary synchronization signal PSS and/or a secondary synchronization signal SSS sent by the network device.

Optionally, the transceiver module 902 is further configured to perform radio link monitoring RLM on the first frequency domain resource.

The transceiver module 902 is further configured to: when a radio link failure is detected on the first frequency domain resource, perform radio link monitoring on the second frequency domain resource; or reestablish a radio link between the terminal device and the network device on the second frequency domain resource.

In this application, behavior of the terminal device on the first frequency domain resource is restricted, and the terminal device performs the first-type operation on the first frequency domain resource, where the first-type operation may be a necessary (or basic) operation that needs to be performed by the terminal device to maintain a connection to the network device during downlink data transmission, so that an RRC connection can be maintained, and a data transmission process can be simplified. In this way, power consumption of the terminal device is reduced from a perspective of communication.

The apparatus has a function of implementing the network device described in embodiments of this application. For example, the apparatus includes a corresponding module, unit, or means (means) used by the network device to perform the steps related to the network device and described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments.

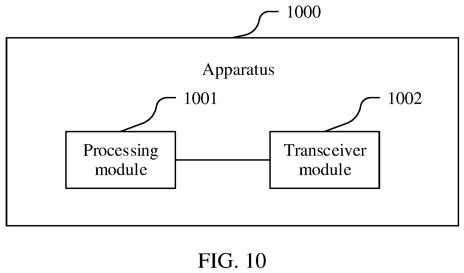

Refer to FIG. 10. An apparatus 1000 includes a processing module 1001 and a transceiver module 1002.

The processing module 1001 is configured to determine a first frequency domain resource.

The transceiver module 1002 is configured to perform a first-type operation for a first terminal on the first frequency domain resource determined by the processing module 1001, where the first-type operation includes at least one of sending a reference signal for radio resource management RRM measurement, sending a reference signal for radio link measurement, and sending first information, and the first information indicates the terminal device to perform a second-type operation for the first terminal on a second frequency domain resource.

The processing module 1001 is configured to perform step 701 in the embodiment corresponding to FIG. 7, and the transceiver module 1002 is configured to perform step 702, step 703, and step 704 in the embodiment corresponding to FIG. 7.

Functions of the determining module 1001 and the execution module 1002 may be performed by the processor 801 in FIG. 8. Optionally, a function of the processing module 1001 may be performed by the processor 801 in FIG. 8, and a function of the transceiver module 1002 may be performed by the transceiver 805 in FIG. 8.

Specifically, the transceiver module 1002 is further configured to send the first information on the first frequency domain resource, where the first information indicates the first terminal device to switch from the first frequency domain resource to the second frequency domain resource.

Optionally, the first information includes a short message and scheduling information, where the short message indicates a system message update and/or an alert indication, and the scheduling information indicates that there is to-be-received downlink data.

Optionally, the scheduling information is carried in downlink control information DCI scrambled by using a PS-RNTI.

Optionally, the second-type operation includes: sending control data; broadcasting system information; sending service data; or sending a random access response.

Optionally, a bandwidth of the first frequency domain resource is a bandwidth of an SSB sent by the network device or a bandwidth of a PSS and/or an SSS sent by the network device.

It may be understood that, the processor in embodiments of this application may be an integrated circuit chip, and has a signal processing capability. In an implementation process, steps in the foregoing method embodiments may be implemented by using an integrated logic circuit of hardware in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component.

The solutions described in this application may be implemented in various manners. For example, these technologies may be implemented by using hardware, software, or a combination of the hardware and the software. For hardware implementation, a processing unit configured to perform these technologies at a communication apparatus (for example, a base station, a terminal, a network entity, or a chip) may be implemented in one or more general-purpose processors, a DSP, a digital signal processing device, an ASIC, a programmable logic device, an FPGA or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification aims to include, but not limited to, these and any memory of another proper type.

This application further provides a computer-readable medium. The computer-readable medium stores a computer program. When the computer program is executed by a computer, the function of the terminal device in any one of the foregoing method embodiments is implemented. Alternatively, when the computer program is executed by a computer, the function of the network device in any one of the foregoing method embodiments is implemented.

This application further provides a computer program product. When the computer program product is executed by a computer, the function of the terminal device in any one of the foregoing method embodiments is implemented. Alternatively, when the computer program product is executed by a computer, the function of the network device in any one of the foregoing method embodiments is implemented.

It may be understood that "an embodiment" mentioned in the whole specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any proper manner. It may be understood that, in various embodiments of this application, sequence numbers of the foregoing processes do not mean an execution sequence. An execution sequence of the processes should be determined based on functions and internal logic of the processes, and should not constitute any limitation on an implementation process of embodiments of this application.

It may be understood that, in this application, "when" and "if" both mean that the apparatus performs corresponding processing in an objective situation, are not intended to limit time, do not require the apparatus to necessarily have a determining action during implementation, and do not mean other limitation.

In this application, an element represented in a singular form is intended to represent "one or more", but does not represent "only one", unless otherwise specified. In this application, unless otherwise specified, "at least one" is intended to represent "one or more", and "a plurality of" is intended to represent "two or more".

In addition, the terms "system" and "network" are usually used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural. The character "/" generally indicates an "or" relationship between the associated objects.

The term "at least one of" in this specification indicates all or any combination of listed items. For example, "at least one of A, B, and C" may indicate the following six cases: Only A exists, only B exists, only C exists, both A and B exist, both B and C exist, and A, B, and C all exist. A may be singular or plural, B may be singular or plural, and C may be singular or plural.

It may be understood that the system, the apparatus, and the method described in this application may alternatively be implemented in another manner. For example, the foregoing apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

In addition, functional units in embodiments of this application may be integrated into one processing unit, each unit may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing embodiments are merely intended to describe the technical solutions in this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof. These modifications or replacements do not make the essence of the corresponding technical solutions depart from the spirit and the scope of the technical solutions of embodiments of this application.

## Claims

1. A communication method, applied to a terminal device and comprising:
determining a first frequency domain resource; and
performing a first-type operation on the first frequency domain resource, wherein the first-type operation comprises at least one of radio resource management RRM measurement, radio link measurement, and receiving first information, the first information indicates the terminal device to perform a second-type operation on a second frequency domain resource, and the second-type operation is different from the first-type operation.

2. The method according to claim 1, wherein the performing a first-type operation on the first frequency domain resource comprises:
receiving the first information on the first frequency domain resource; and
the method further comprises:
switching from the first frequency domain resource to the second frequency domain resource based on the first information.

3. The method according to claim 1 or 2, wherein the first information comprises a short message and scheduling information, wherein the short message indicates a system message update and/or an alert indication, and the scheduling information indicates that there is to-be-received downlink data.

4. The method according to any one of claims 1 to 3, wherein the first information is carried in downlink control information DCI scrambled by using a power saving radio network temporary identifier PS-RNTI.

5. The method according to any one of claims 1 to 4, wherein
the second-type operation comprises: receiving control data from a network device; receiving system information from the network device; receiving service data from the network device; or receiving a random access response from the network device.

6. The method according to any one of claims 1 to 5, wherein a bandwidth of the first frequency domain resource is a bandwidth of a synchronization signal block SSB sent by the network device or a bandwidth of a primary synchronization signal PSS and/or a secondary synchronization signal SSS sent by the network device.

7. The method according to any one of claims 1 to 5, wherein the determining a first frequency domain resource comprises:
receiving configuration information sent by the network device, wherein the configuration information comprises information about a frequency domain resource of a downlink reference signal; and
using the frequency domain resource of the downlink reference signal as the first frequency domain resource.

8. The method according to any one of claims 1 to 7, wherein the performing a first-type operation on the first frequency domain resource comprises:
performing radio link monitoring RLM on the first frequency domain resource, wherein
when a radio link failure is detected on the first frequency domain resource, the method further comprises:
performing radio link monitoring on the second frequency domain resource; or
reestablishing a radio link between the terminal device and the network device on the second frequency domain resource.

9. The method according to any one of claims 1 to 8, wherein the method further comprises:
determining a third frequency domain resource; and
sending second information on the third frequency domain resource, wherein the second information indicates the terminal device to perform the second-type operation on the second frequency domain resource.

10. The method according to claim 9, wherein the second information comprises random access preamble data and/or a scheduling request.

11. A communication method, applied to a network device and comprising:
determining a first frequency domain resource; and
performing a first-type operation for a first terminal on the first frequency domain resource, wherein the first-type operation comprises at least one of sending a reference signal for radio resource management RRM measurement, sending a reference signal for radio link measurement, and sending first information, and the first information indicates the terminal device to perform a second-type operation for the first terminal on a second frequency domain resource.

12. The method according to claim 11, wherein the performing a first-type operation for a first terminal on the first frequency domain resource comprises:
sending the first information on the first frequency domain resource, wherein the first information indicates the first terminal to switch from the first frequency domain resource to the second frequency domain resource.

13. The method according to claim 11 or 12, wherein the first information comprises a short message and scheduling information, wherein the short message indicates a system message update and/or an alert indication, and the scheduling information indicates that there is to-be-received downlink data.

14. The method according to any one of claims 11 to 13, wherein the first information is carried in downlink control information DCI scrambled by using a power saving radio network temporary identifier PS-RNTI.

15. The method according to any one of claims 11 to 14, wherein
the second-type operation comprises: sending control data; broadcasting system information; sending service data; or sending a random access response.

16. The method according to any one of claims 11 to 15, wherein a bandwidth of the first frequency domain resource is a bandwidth of a synchronization signal block SSB sent by the network device or a bandwidth of a primary synchronization signal PSS and/or a secondary synchronization signal SSS sent by the network device.

17. A communication apparatus, comprising:
a processing module, configured to determine a first frequency domain resource; and
a transceiver module, configured to perform a first-type operation on the first frequency domain resource determined by the processing module, wherein the first-type operation comprises at least one of receiving a reference signal for radio resource management RRM measurement, receiving a reference signal for radio link measurement, and receiving first information, the first information indicates the terminal device to perform a second-type operation on a second frequency domain resource, and the second-type operation is different from the first-type operation.

18. The apparatus according to claim 17, wherein
the transceiver module is further configured to receive the first information on the first frequency domain resource; and
the processing module is further configured to switch from the first frequency domain resource to the second frequency domain resource based on the first information.

19. The apparatus according to claim 17 or 18, wherein the first information comprises a short message and scheduling information, wherein the short message indicates a system message update and/or an alert indication, and the scheduling information indicates whether there is to-be-received downlink data.

20. The apparatus according to any one of claims 17 to 19, wherein the first information is carried in downlink control information DCI scrambled by using a power saving radio network temporary identifier PS-RNTI.

21. The apparatus according to any one of claims 17 to 20, wherein
the second-type operation comprises: receiving control data from a network device; receiving system information from the network device; receiving service data from the network device; or receiving a random access response from the network device.

22. The apparatus according to any one of claims 17 to 21, wherein a bandwidth of the first frequency domain resource is a bandwidth of a synchronization signal block SSB sent by the network device or a bandwidth of a primary synchronization signal PSS and/or a secondary synchronization signal SSS sent by the network device.

23. The apparatus according to any one of claims 17 to 22, wherein the transceiver module is further configured to receive, on the first frequency domain resource, a reference signal for radio link monitoring RLM; and
the transceiver module is further configured to: when a radio link failure is detected on the first frequency domain resource, receive, on the second frequency domain resource, the reference signal for radio link monitoring; or reestablish a radio link between the terminal device and the network device on the second frequency domain resource.

24. A communication apparatus, comprising:
a processing module, configured to determine a first frequency domain resource; and
a transceiver module, configured to perform a first-type operation for a first terminal on the first frequency domain resource determined by the processing module, wherein the first-type operation comprises at least one of sending a reference signal for radio resource management RRM measurement, sending a reference signal for radio link measurement, and sending first information, and the first information indicates the terminal device to perform a second-type operation for the first terminal on a second frequency domain resource.

25. The apparatus according to claim 24, wherein the transceiver module is further configured to send the first information on the first frequency domain resource, wherein the first information indicates the first terminal device to switch from the first frequency domain resource to the second frequency domain resource.

26. The apparatus according to claim 24 or 25, wherein the first information comprises a short message and scheduling information, wherein the short message indicates a system message update and/or an alert indication, and the scheduling information indicates that there is to-be-received downlink data.

27. The apparatus according to any one of claims 24 to 26, wherein the first information is carried in downlink control information DCI scrambled by using a power saving radio network temporary identifier PS-RNTI.

28. The apparatus according to any one of claims 24 to 27, wherein
the second-type operation comprises: sending control data; broadcasting system information; sending service data; or sending a random access response.

29. The apparatus according to any one of claims 24 to 28, wherein a bandwidth of the first frequency domain resource is a bandwidth of a synchronization signal block SSB sent by the network device or a bandwidth of a primary synchronization signal PSS and/or a secondary synchronization signal SSS sent by the network device.

30. A computer-readable medium, configured to store a computer program or instructions, wherein when the computer program or the instructions are executed, a computer is enabled to perform the method according to any one of claims 1 to 10; or when the computer program or instructions are executed, a computer is enabled to perform the method according to any one of claims 11 to 16.
